(19) Europäisches Patentamt
European Patent Office
Office européen des brevets

(11) **EP 3 479 178 B1**

(12) **EUROPÄISCHE PATENTSCHRIFT**

(45) Veröffentlichungstag und Bekanntmachung des Hinweises auf die Patenterteilung:
**20.09.2023 Patentblatt 2023/38**

(21) Anmeldenummer: **17733867.0**

(22) Anmeldetag: **03.07.2017**

(51) Internationale Patentklassifikation (IPC):
**G05B 17/02** (2006.01) **B29C 45/76** (2006.01)
**G05B 13/04** (2006.01) **G05B 19/418** (2006.01)

(52) Gemeinsame Patentklassifikation (CPC):
**G05B 17/02; G05B 13/041; G05B 19/41885;**
**B29C 45/76; Y02P 90/02**

(86) Internationale Anmeldenummer:
**PCT/EP2017/066461**

(87) Internationale Veröffentlichungsnummer:
**WO 2018/007296 (11.01.2018 Gazette 2018/02)**

(54) **SIMULATIONS-BASIERTE REGELUNG EINES FERTIGUNGSSYSTEMS UNTER BERUECKSICHTIGUNG EINES VORAB BERECHNETEN VERARBEITUNGSFENSTERS**

SIMULATION-BASED CONTROL OF A MANUFACTURING SYSTEM

REGULATION D'UN SYSTEME DE PRODUCTION BASÉ SUR UNE SIMULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2016 EP 16177749**

(43) Veröffentlichungstag der Anmeldung:
**08.05.2019 Patentblatt 2019/19**

(73) Patentinhaber: **Bauer, Heiko**
**66996 Fischbach bei Dahn (DE)**

(72) Erfinder: **Bauer, Heiko**
**66996 Fischbach bei Dahn (DE)**

(74) Vertreter: **Schwarz, Claudia**
**Schwarz + Kollegen**
**Patentanwälte**
**Hermann-Schmid-Straße 10**
**80336 München (DE)**

(56) Entgegenhaltungen:
DE-A1-102007 035 274    DE-A1-102007 035 274
DE-A1-102012 104 885    DE-A1-102012 104 885

**Beschreibung**

Die Erfindung liegt auf den Gebieten der Regelungstechnik und des maschinellen Lernens (machine learning) und betrifft insbesondere ein Verfahren und ein System zur automatischen Regelung eines Fertigungssystems, insbesondere einer Spritzgießmaschine sowie einen Klassifikationsagenten und eine Berechnungseinheit.

Bei einer Spritzgießmaschine oder bei anderen Fertigungsmaschinen, besteht eine wichtige Aufgabe darin, diese so einzustellen, dass ein möglichst optimaler Betrieb sichergestellt werden kann. Dieser kennzeichnet sich u.a. durch die Minimierung von Fehlern, wie z.B. Ausschuss. Zur Lösung dieser Einstellungsaufgabe ist es notwendig, zu berechnen, welche Einstellungen zu guten Teilen und welche zu Ausschuss führen.

Systeme, mit denen bei laufender Produktion mithilfe einer Prozessüberwachungseinheit Prozesswerte von der Fertigungsmaschine mittels zugeordneten Sensoren erfasst werden, sind im Stand der Technik bekannt. So offenbart die DE 102012104885 A1 ein Verfahren zur Beseitigung von Ausschuss in einer Fertigungsmaschine. Dieses System lehrt, optimierte Prozesspunkte zu finden bzw. automatisch zu definieren. Insbesondere können mit der genannten Druckschrift Werkzeuginnendruckkurven bestimmt werden, bei denen gute Teile entstehen (kein Ausschuss). Die Berechnung der Einstelldaten zur Regelung der Maschine können aus dieser Druckschrift nicht ermittelt werden.

In der Praxis hat sich dieses System jedoch dahingehend als defizitär erwiesen, dass eine automatische Regelung der Spritzgießmaschine (oder eines anderen Fertigungssystems) nicht möglich ist. Die automatische Berechnung von Einstelldaten fehlt hier.

Hier setzt die vorliegende Anmeldung an, um diesen Nachteil zu überwinden. Eine Aufgabe der vorliegenden Erfindung besteht somit darin, ein Fertigungssystem verbessert zu regeln. Insbesondere soll basierend auf automatischen Berechnungen ein Einstelldatensatz zur Regelung der Fertigungsmaschine generiert werden, bei dem erfasste Sensordaten während des Betriebs der Fertigungsmaschine berücksichtigt werden.

Diese Aufgabe wird durch den jeweiligen Gegenstand der beiliegenden nebengeordneten Ansprüche gelöst, insbesondere durch ein Verfahren zur automatischen Regelung nach Anspruch 1 und ein Regelungssystem nach Anspruch 10.

Gemäß einem ersten Aspekt betrifft die Erfindung ein Verfahren zur automatischen Regelung eines Fertigungssystems gemäß Anspruch 1.

Im Folgenden werden die im Rahmen dieser Anmeldung verwendeten Begrifflichkeiten näher erläutert.

In einer wichtigen Ausführungsform der Erfindung ist die Fertigungsmaschine eine Spritzgießmaschine zur Produktion von Kunststoffformteilen mittels eines Werkzeugs zur Formung der Formteile, insbesondere eine Kaskadenspritzgussmachine. In alternativen Ausführungsformen der Erfindung kann es sich bei dem Fertigungssystem auch um ein logistisches System oder um ein anderes Produktionssystem handeln.

Bei der Vorverarbeitung handelt es sich um ein maschinelles automatisches Verfahren. Es kann ein Klassifikationsverfahren angewendet werden. Insbesondere kann ein SVM-Verfahren (Support-Vector-Machine Verfahren) zum Einsatz kommen.

Der Begriff Sensordaten stammt aus der künstlichen Intelligenz und umfasst alle erfassten Daten, in unserem Falle alle Betriebsdaten der Fertigung. Damit gehören nicht nur numerische Messwerte, sondern auch andere Betriebsdaten wie z. B. Ausschussmeldungen zu den Sensordaten. Sensordaten können zunächst mit technischen Sensoren im Fertigungssystem erfasst und dann als Daten an ein Modul eines Berechnungsagenten weitergegeben werden. Das Modul des Berechnungsagenten kann im Rahmen dieser Anmeldung im Sinne eines Systems der künstlichen Intelligenz auch als Sensor bezeichnet werden. Sensordaten können damit numerische Werte und diskrete Werte umfassen. Der Begriff Prozessdaten oder Prozesswerte stammt aus der Qualitätskontrolltheorie oder der Theorie von SIX SIGMA und umfasst die numerischen Sensordaten, die für die Analyse von Fehlern relevant sind. Der Begriff Messwerte stammt aus der Regelungstechnik und umfasst diejenigen Prozesswerte, die bei der numerischen Regelung einer Maschine verwendet werden. In der Kunststoffverarbeitung stimmt der Begriff also mit dem Begriff Maschinenwerte überein. Es gibt also mehr Prozesswerte als Messwerte. Als Messwerte einer Regelung kommen nur diejenigen Prozesswerte in Frage, für die eine Übertragungsfunktion oder eine Gewichtsfunktion bekannt ist oder berechenbar ist. Das ist lange nicht bei allen Prozesswerten der Fall. In der hier beschriebenen Erfindung wollen wir darlegen wie auch qualitätsrelevante Prozessdaten, die keine Messwerte einer numerischen Regelung sind, genutzt werden können.

Der Begriff Regelung wird in einem erweiterten Sinne interpretiert. Jan Lunze definiert im Buch "Regelungstechnik 1, 10 Auflage, Springer Vieweg Verlag" auf Seite 1:
"Die Regelungstechnik befasst sich mit der Aufgabe, einen sich zeitlich verändernden Prozess von außen so zu beeinflussen, dass dieser Prozess in einer vorgegebenen Weise abläuft".

Wenn wir also einer Spritzgießmaschine vorgeben wollen, außer beim Anfahren nur gute Teile zu produzieren, gehört dies zur Regelungstechnik.

Auf Seite 3 schreibt Jan Lunze:
"Prinzipielle Wirkweise der Regelung. Jede Regelung beinhaltet 3 wichtige Schritte:

1. Messen. Die Regelgröße wird entweder direkt gemessen oder - wie bei nicht messbaren Regelgrößen z.B. Qualitätswerten - aus anderen Messgrößen berechnet.

2. Vergleichen. Der Wert der Regelgröße wird mit dem Wert der Führungsgröße verglichen. Die Differenz zwischen beiden Größen ist die Regelabweichung.

3. Stellen. Aus der Regelabweichung wird unter Berücksichtigung der dynamischen Eigenschaften der Regelstrecke die Stellgröße bestimmt."

Implizit unterstellt hier Jan Lunze, dass sowohl die Regelgröße als auch die Führungsgröße numerisch sind. Wir erweitern diese Aufgabenstellung nun so, dass die gemessene Größe auch diskret sein kann. Das Ergebnis des Messens z.B. an einer Maschine sind also nicht nur Drücke, Temperaturen oder Maschinenwerte, sondern auch die Information, ob die Messung fehlerfrei ist, oder ein Fehler nach Grund aufgetreten ist. Wir vergleichen nicht nur die gemessenen Maschinengrößen mit den Führungsgrößen, sondern auch die restlichen Prozesswerte mit den mittleren Prozesswerten, und wir vergleichen, ob ein Fehler aufgetreten ist. Das ist ein Vergleich der rückgemeldeten Qualitätsinformation mit der Vorgabe, dass kein Fehler auftreten soll. Ist kein Fehler aufgetreten, so kann die Fertigung wie üblich weiterlaufen. Bei einer numerischen Regelung bleibt die Führungsgröße bestehen und es wird eine Stellgröße errechnet. Ist jedoch ein Fehler durch das Wirken von Störgrößen aufgetreten, so muss die Führungsgröße so angepasst werden, dass der Fehler nicht wieder auftritt. Dies kann dann geschehen, wenn die Störgrößen zu messbaren Abweichungen der Prozesswerte führen und wir auf diese Art und Weise erkennen können, wie wir den Störgrößen entgegenwirken können, und wenn Simulationen zur Bestimmung der Führungsgrößen möglich sind.

Diese neue Art der Regelung hat die gleiche prinzipielle Wirkweise wie die bekannte Regelung, ist jedoch so verallgemeinert, dass sie viele Fehler selbsttätig beseitigen kann.

Der Begriff "Klassifikation" dient zur Zuordnung der Messwerte in Klassen. Die Klassen können in einer Definitionsphase bestimmt werden. Vorzugweise sind die Klassen als die Fehlerklassen vordefiniert. Dabei hat man normalerweise die Klasse "Gut" und für jeden Fehler nach Grund eine eigene Klasse. Wenn man die Qualität untersucht, dann bedeutet Fehler nach Grund Ausschuss nach Grund, also z.B. "Artikel nicht voll", "Schlieren", "Einfallstelle", "Blase",... Wir haben also üblicherweise eine endliche Menge diskreter Klassen, die durch einen Text beschrieben sind. Manchmal kann ein Fehler auch entstehen, indem ein numerischer Wert einen Grenzwert übersteigt, z.B. beim Automotor NOx > 600.

Ein SOLL-Prozesspunkt kennzeichnet sich als eine Menge von Prozesswerten, bei deren Anwendung fehlerfrei produziert werden kann. Der SOLL-Prozesspunkt (es kann auch eine Menge von SOLL-Prozesspunkten ermittelt werden, der Einfachheit halber wird der Begriff meist nur in der Singularform verwendet) dient als Eingangsgröße zur weiteren Berechnung des Einstelldatensatzes. SOLL-Prozesspunkte kennt man z.B. aus der Logistik und der Kunststoffverarbeitung. Fertigungsaufträge erhalten Solltermine, wenn diese in der Vorfertigung eingehalten werden, so kann rechtzeitig montiert werden. An Spritzgießmaschinen überwacht man bei Hochqualitätsteilen die Werkzeuginnendruckkurve als SOLL-Prozesspunkt.

Der Einstelldatensatz umfasst mehrere Einstellparameter. Die Einstellparameter dienen als Führungsgrößen oder Sollwerte der numerischen Regelung. Der Einstelldatensatz wird durch Ausführen eines Simulationsverfahrens automatisch errechnet. Die Einstellparameter können beispielsweise betreffen: Die Schneckendrehzahl, Temperatur einer Heizspirale oder Einspritzgeschwindigkeit. Die Einstellparameter dienen zur Regelung der Fertigungsmaschine während deren Betrieb. Im Unterschied zu bisherigen Verfahren werden die mittels eines Simulationsbausteins errechneten Einstelldaten nicht zur Konstruktion des Werkzeugs verwendet, sondern zur fehlerfreien Regelung der Fertigungsmaschine. Bei einer logistischen Anwendung werden die Einstellparameter Stellgrößen genannt und umfassen die kapazitätsrelevanten Daten, wie Schichtkalender und Personaleinteilung.

Die Einstelldaten einer Fertigungsmaschine dienen als Führungsgrößen für die numerische Regelung der Fertigungsmaschine und können bei Vorhandensein einer Hostschnittstelle vom Computer in die Steuerung der Maschine geladen werden.

Die Simulation wird vorzugsweise computer-implementiert und vollautomatisch ausgeführt. Dabei werden Versuchspläne mit wahrscheinlichen Führungsgrößen erstellt und in einem Simulationsmodell zugehörige Prozesswerte errechnet. Diese können nun mit dem vorher errechneten SOLL-Prozesspunkt verglichen werden. Nach der Regel "steepest ascent" (steilste Steigung) können die Führungsgrößen solange schrittweise verbessert werden, bis die errechneten zugehörigen Prozesspunkte nahe dem errechneten SOLL-Prozesspunkt befindet. Danach kann ggf. mit aus RSM (response surface methodology, Methode der Antwortfläche) bekannten Methoden eine optimale Führungsgröße errechnet werden.

Die Simulation ist ein computer-implementiertes Berechnungsverfahren. Aufgabe der Simulation ist es, unter Voraussetzung der gegenwärtigen Störgrößen und ausgewählter Stellgrößen die prognostizierte Werkzeuginnendruckkurve zu errechnen. Jeder Punkt der Kurve wird dabei als Polynom 5. Grades aus Stellgrößen und Störgrößen ermittelt. Mit der Simulation wird der technische Effekt erreicht, dass das Verarbeitungsfenster (Trennung der Gut-Teile und der Schlecht-Teile durch eine Hyperebene) ermittelt werden kann.

Die Erfindung beruht auf einem zweistufigen Verfahren:

In einem ersten Schritt werden die Grenzen des Verarbeitungsfensters bestimmt. Eine Verletzung dieser Grenzen löst eine Aktion aus. In einem zweiten Schritt werden neue Führungsgrößen durch Simulation bestimmt. Dies wiederum hat zur Folge, dass der Prozess im Verarbeitungsfenster abläuft.

Eine Reduktion der Rechenlast kann vorteilhafterweise dadurch erreicht werden, indem diejenigen Einstelldaten ermittelt werden, bei denen die Prozesswerte im Verarbeitungsfenster liegen. Damit werden die Berechnungen sehr viel weniger komplex, als wenn versucht würde, den vielfältigen Störungen entgegenzuwirken.

Die Simulation wird bevorzugt durch einen Ansatz maschinellen Lernens ausgeführt, dabei sind meist zwei Schritte nötig. Für das erste Manifold-Learning auf Basis von Versuchsplandaten hat sich polynomiales SVM (Support-Vector-Machine Verfahren) am Besten bewährt. Für den Transfer dieses Wissen von einem Werkzeug auf ein anderes (manifold transfer learning) erscheinen convolutional neural networks (CNN) bisher am vorteilhaftesten, oder Verfahren, die Fachwissen nutzen, um die Merkmale (Features) zu transformieren.

Die mittels der Simulation berechneten Prozesspunkte sollen im Verarbeitungsfenster liegen. Das Verarbeitungsfenster dient somit und ist begrifflich gleichzusetzen mit einer Spezifikation von SOLL-Prozesspunkten. Mit anderen Worten dient die Simulation in einem ersten Schritt zur Berechnung des Verarbeitungsfensters (und damit eines SOLL-Betriebs ohne Fehler). Dazu wird die Lage des Verarbeitungsfensters und dessen Grenzen mit Hilfe von Differentialgleichungen bestimmt. In einem zweiten Schritt können die Einstelldaten so bestimmt werden, dass die simulierten Prozesswerte im Verarbeitungsfenster liegen und die gefertigten Teile keine Fehler aufweisen (Gutteile). Der Fertigungsprozess soll im Verarbeitungsfenster ablaufen. Ein Verarbeitungsfenster kennzeichnet sich also durch diejenigen Prozesswerte, bei denen ein fehlerfreier Betrieb der technischen Anlage (z.B. Spritzgießanlage) zur Herstellung von fehlerfreien Teilen (kein Ausschuss) sichergestellt werden kann.

Aus den gemessenen Sensordaten können Trainingsdaten für das neuronale Netz zum Training des Netzwerkes generiert werden. Eine hohe Genauigkeit kann nach Training mit vielen Sensordaten an vielen Maschinen und/oder Werkzeugen erzeugt werden, da der Vorhersagefehler umgekehrt proportional zur Wurzel der Anzahl der verwendbaren Messwerte ist.

Die Sensordaten können direkt zum Training des Netzwerkes verwendet werden. In einer bevorzugten Ausführungsform der Erfindung können aus gemessenen Sensordaten andere Sensordaten abgeleitet oder errechnet werden. So kann z.B. aus der gemessenen Ladung der Druck innerhalb des Werkzeugs berechnet werden.

Ausschuss kann repräsentiert werden als eine Variation einer Werkzeuginnendruckkurve (angussnah und/oder angussfern gemessen) oder einer Hydraulikdruckkurve.

Der Verlauf des Hydraulikdrucks gibt während der Einspritzphase einen Überblick über die Fließwiderstände im Düse-Anguss-System. Die piezo-elektrischen Druckaufnehmer können direkt mit dem unter Druck stehenden Hydraulik-Öl in Kontakt gebracht werden.

Dies hat den technischen Hintergrund, dass das Gewicht eines Spritzteils, das ein wichtiges Qualitätsmerkmal ist, proportional zum Integral über die Werkzeuginnendruckkurve ist. Einige Maschinen erlauben eine Regelung über diese Integralkennzahl.

In einer vorteilhaften Weiterbildung der Erfindung wird ein Werkzeuginnendruck als IST-Sensordatum bzw. Sensordatum erfasst, bevorzugt minutengenau. Dies hat folgenden technischen Hintergrund. Der Auskristallisierungsprozess des Spritzteils im Werkzeug unterliegt starken Variationen, obwohl die Regelung der Maschine diese äußerst präzise regelt. Der Schlüssel zur Optimierung der Qualität ist also ein Verständnis dessen, was innerhalb des Werkzeugs passiert. Dazu dienen die hier eingesetzten Sensoren zur Messung von Druck und Temperatur innerhalb des Werkzeugs.

Als weiteres Sensordatum kann eine Hydraulikdruckkurve eingelesen werden, bevorzugt minutengenau. Anhand des erfassten Hydraulikdruckes werden die Phasen im Spritzgießprozess bestimmt, sowie Kennzahlen über Varianzen, die mit dem Auftreten von Ausschuss zusammenhängen. Das bedeutet, dass sofort mit der Übernahme der Hydraulikdruckkurven auch die errechneten "Gierth"-Kennzahlen (z.B. Berechnung des Integrals über die Werkzeuginnendruckkurve) zur Verfügung gestellt werden. Diese Kennzahlen werden dann bei der Bestimmung des Verarbeitungsfensters berücksichtigt. Die Werkzeugdaten bzw. Sensordaten werden gespeichert.

Erfindungsgemäß umfasst das Fertigungssystem eine Regelung eines Materialflusses, wobei produzierte Mengen an Maschinen, Arbeitsstationen und/oder während eines Transportes erfasst werden und wobei der Materialfluss durch seine Stellgrößen, Laufzeiten an Arbeitsplätzen und eine Zuordnung von Ressourcen geregelt wird.

In einer weiteren, vorteilhaften Ausführung der Erfindung wird zur Klassifikation der Sensordaten ein Planungsalgorithmus (Scheduling-Algorithmus) mit kombinierten Dekompositionsverfahren angewendet. Ein Dekompositionsverfahren ist ein algorithmischmathematischer Ansatz, mit dem ein globales Problem in mehrere, unabhängige Teilprobleme zerlegt und dann gelöst werden kann. Ein Dekompositionsverfahren kann erfindungsgemäß im Rahmen der Planung z.B. zur Maschinendekomposition, Auftragsdekomposition, Zeitdekomposition und zur Rüstdekomposition angewendet werden.

In einer weiteren, vorteilhaften Ausführung der Erfindung werden bei dem Bestimmen des Einstelldatensatzes auch Störgrößen des Fertigungssystems verrechnet.

In einer weiteren, vorteilhaften Ausführung der Erfindung werden zur fehlerfreien Regelung des Fertigungssystems Ausschussgründe erfasst, die zur Klassifikation der Prozessdaten verarbeitet werden.

In einer weiteren, vorteilhaften Ausführung der Erfindung wird zur Optimierung der Simulation ein auf einer Response-Surface-Methode (RSM) basierter Algorithmus verwendet. In der Statistik erforscht der RSM-Algorithmus die Beziehungen zwischen mehreren erläuternden Variablen und einer oder mehreren Antwortvariablen. Die Methode wurde von G. E. P. Box und K. B. Wilson im Jahre 1951 eingeführt. Die Hauptidee von RSM ist es, eine Sequenz von entworfenen Experimenten zu verwenden, um eine optimale Antwort zu erhalten. Statistische Ansätze wie RSM können eingesetzt werden, um die Qualität der Produktion z.B. von Spritzgießeilen durch Optimierung der operativen Faktoren zu maximieren. Im Gegensatz zu herkömmlichen Methoden, kann die Interaktion zwischen Prozessvariablen durch statistische Techniken bestimmt werden. So kann ein Polynommodell ersten Grades verwendet werden, um abzuschätzen, welche Sensordaten die Antwortvariable (n) von Interesse beeinflussen. Es kann auch ein Polynommodell zweiten Grades verwendet werden, um ein bestimmtes Ziel (z.B. Qualität der Spritzgießteile) zu optimieren.

Spritzgießmaschinen sind teuer und deshalb sind in der Branche Versuchspläne sehr dünn besetzt. Für das hier vorgeschlagene Verfahren wird für ein Werkzeug einer Artikelgruppe ein aufwendiger Versuchsplan, bevorzugt ein CCD+ Versuchsplan, benötigt. Dieser Versuchsplan wird genutzt, um jeden Punkt der Werkzeuginnendruckkurve mit einem Polynom 3. Grades oder Polynom 5. Grades zu beschreiben. Diese Prädiktion der Werkzeuginnendruckkurve dient als Basis für die virtuelle Versuchsplanung beim ersten Werkzeug. Ein typisches Problem beim Spritzgießen ist, dass die Werkzeuge sich in der laufenden Fertigung aufheizen. Dies verursacht Störungen. Die Störungen wirken weiter. Das Werkzeug heizt sich immer weiter auf. Das ist z.B. auch bei der Herstellung von Stoßstangen ein großes Problem, weil die Werkzeuge groß sind. Solange kein Ausschuss entsteht, sind die Variationen der Werkzeuginnendruckkurve irrelevant. Aber bei weiter absinkenden Teilegewicht entstehen Fehler, die durch eine verbesserte Einstellung beseitigt werden müssen. Eine der möglichen Ausschussgründe, die auftreten könnten, ist eine Einfallstelle. Wenn zu wenig Material in der Form ist und das Teil abkühlt, zieht sich das Teil zusammen und löst sich an einigen Stellen von der Wand ab, es kommt zu Einfallstellen. Es kann eine Werkzeuginnendruckkurve berechnet werden, aus der ersichtlich ist, wann eine Einfallstelle auftritt. Jeder Kurvenpunkt dieser Kurve entsteht als polynomiale Prädiktion 5-ten Grades auf Basis von Einstelldaten und Störgrößen.

Da die Ausführung von realen Versuchen an einer technischen Anlage (Spritzgießanlage) zu teuer ist, wird im Rahmen dieser Anmeldung auf virtuelle bzw. simulierte Versuchsplanungen zurückgegriffen, bei denen Faktoren und Werte in das Versuchsplanungsprogramm eingegeben werden, um diese von einem Computer auf virtuelle Weise auszuführen und somit zu simulieren. In diesem Sinne ist der Begriff "Simulation" im Rahmen dieser Anmeldung zu verstehen. Im virtuellen Versuchsplanungsprogramm wird eine fehlerfreie Kurve gefunden, indem z.B. die Nachdruckzeit erhöht wird und damit auch das Teilegewicht wieder steigt und die Einfallstelle verschwindet.

Die hier vorgeschlagene Simulationsberechnung berücksichtigt den Einfluss folgender Größen auf die Verarbeitungsqualität und den Werkzeuginnendruck:

- Einspritzgeschwindigkeit

- Umschaltpunkt

- Nachdruckzeit

- Nachdruckhöhe

- Staudruck.

- Massetemperatur und/oder

- Formnesttemperatur.

Es wird von wenigstens 6 dieser 7 Größen einen Versuchsplan benötigt und erstellt. Bei den ersten 5 Größen reagiert die Werkzeuginnendruckkurve mit etwas Verzug, denn die Werkzeuginnendruckkurve reagiert nicht sofort auf die Stellgrößen, sondern auf die Maschinenwerte, d.h. die Prozesswerte der Maschine. Bei 2 Stellgrößen gibt es 13 benötigte Einstellungen, wobei jede Stellgröße um eine bzw. um ^2 Einheiten verstellt werden kann, oder beide gemeinsam um eine Einheit.

Die Ausschussdaten mit kausalen Ausschussgrund werden manuell erfasst.

Die Wirkung der Störgrößen kann durch die Abweichung der Werkzeuginnendruckkurve gegenüber der Versuchsplandruckkurve ermittelt werden.

Im Unterschied zum Stand der Technik, wird im Rahmen dieser Anmeldung nicht nur erkannt, dass ein Fehler (Einfallsstelle) vorliegt, sondern auch, welche Einstelldaten einzustellen sind, damit der Fehler vermieden werden kann, so dass die Werkzeuginnendruckkurven im Verarbeitungsfenster liegen.

Vorteilhafterweise kann mit der hier vorgeschlagenen Lösung eine Anpassung an aktuelle und dynamisch veränderlich Prozessbedingungen ausgeführt werden (z.B. Temperaturänderung über die Zeit etc.). Diese dynamisch veränderlichen Störgrößen, die zudem aktuelle sensorisch im Werkzeug erfasst werden, werden vorteilhafterweise bei der Berechnung des Einstelldatensatzes berücksichtigt.

Es gibt viele unterschiedliche Werkzeuge zur Herstellung von Teilen, wie z.B. Stoßstangen. Dabei verhalten sich die Werkzeuginnendruckkurven alle ähnlich. Die Ausschussursachen sind ähnlich; die Verarbeitungsfenster sind ähnlich. Ebenso ist der Gradient zum Beseitigen der Ausschussursachen ähnlich, denn der beruht auf physikalischen Ursachen und die bleiben gleich. Umgekehrt treten bei den einzelnen Werkzeugen Besonderheiten der Geometrie, des Materials, der Maschine und des Fertigungsumfelds auf. Das bedeutet, dass die Einstelldatensätze der Werkzeuge alle unterschiedlich sind und sein müssen. Das hier vorgeschlagene Verfahren nützt den Umstand, dass bei ähnlichen Problemen von Werkzeugen einer Artikelgruppe ähnliche Stellgrößenänderungen vorgenommen werden müssen. Dies bedeutet, dass insbesondere ein auf einem kennzahlenbasierten Gradienten basierendes Verfahren von einem Werkzeug auf ein anderes näherungsweise übertragbar ist. In der klassischen Regelungstechnik gibt es einen Gradienten vom Messpunkt zur Führungsgröße, aus dem man mit Hilfe der Differentialgleichungen die Stellgrößen bestimmen kann. Bei diesem Vorschlag hat man näherungsweise Gradienten an den Grenzen des Verarbeitungsfensters, so dass man die Stellgrößen derart ändern kann, dass der Prozess wieder im Verarbeitungsfenster stattfindet.

Nach Erfassung der Sensordaten werden automatisch weiter Prozessdaten ermittelt. Dazu gehören neben der Berechnung der Gierth-Kennzahlen auch die Bestimmung der einzelnen Phasen des Formteilbildungsvorganges. Bei einer Düse sind dies: Formfüllen, Komprimieren, Nachdrücken, Restkühlen.

Gemäß einer alternativen, vorteilhaften Ausführung der Erfindung wird zur Klassifikation ein Support-Vector-Machines-Verfahren (Supportvektor-Maschinenverfahren - SVM) verwendet.

Vorstehend wurde die Erfindung anhand der verfahrensgemäßen Aufgabenlösung beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die gegenständlichen Ansprüche (die beispielsweise auf eine Berechnungseinheit, einen Klassifikationsagenten oder auf ein Regelungssystem gerichtet sind) mit den Merkmalen weitergebildet sein, die in Zusammenhang mit dem Verfahren beschrieben oder beansprucht sind. Die entsprechenden funktionalen Merkmale des Verfahrens werden dabei durch entsprechende gegenständliche Module, insbesondere durch elektronische Hardware-Module oder Mikroprozessor-Module, des Systems bzw. der Vorrichtung ausgebildet und umgekehrt.

In einer weiteren, vorteilhaften Ausführung der Erfindung umfasst das Fertigungssystem mehrere Komponenten, die numerisch geregelt sind, und eine übergeordnete diskrete Regelung, die den numerischen Regelungen Führungsgrößen vorgibt.

Insbesondere können die Sensordaten für die Komponenten einer übergeordneten diskreten Regelung übergeben werden. Die übergeordnete diskrete Regelung generiert dann Führungsgrößen für die numerische Regelung der Komponenten. Die diskrete Regelung kann deshalb als Führungsgrößengenerator fungieren. Dabei können auch Fehler erfasst und den numerischen Regelungen der Komponenten entsprechende Führungsgrößen übergeben werden.

Gemäß einem weiteren Aspekt betrifft die Erfindung ein Regelungssystem gemäß Anspruch 10.

In der folgenden detaillierten Figurenbeschreibung werden nicht einschränkend zu verstehende Ausführungsbeispiele mit deren Merkmalen und weiteren Vorteilen anhand der Zeichnung besprochen.


**KURZE BESCHREIBUNG DER FIGUREN**

Fig. 1    zeigt eine schematische Darstellung zur Regelung einer Spritzgießmaschine gemäß einer bevorzugten Ausführungsform der Erfindung.

Fig. 2    ist eine schematische Darstellung eines diskreten Reglers.

Fig. 3    ist eine grafische Darstellung einer SVM-Klassifikation.

Fig. 4    zeigt eine beispielhafte Darstellung am Beispiel einer Motorsteuerung.

Fig. 5    stellt eine beispielhafte Darstellung für eine Bildschirmmaske zum Erfassen von Ausschuss nach Grund dar.

Fig. 6    zeigt eine beispielhafte Darstellung einer Werkzeuginnendruckkurve.

Fig. 7    ist eine beispielhafte Darstellung eines Six Sigma Verfahrens.

Fig. 8    ist eine weitere, beispielhafte Darstellung eines Six Sigma Verfahrens mit einem eingegrenzten Verarbeitungsfenster.

Fig. 9    zeigt ein Kurvendiagramm zum Ausschussgrund "Einfallstelle".

Fig. 10    ist ein Diagramm einer Z-Transformierten von Ausschussteilen mit zugehörigem Gewicht.

Fig. 11    ist ein Beispielbild einer Moldflow-Simulation.

Fig. 12    zeigt ein Beispiel für eine typische Fertigungsstruktur,

Fig. 13    ist ein Balkendiagramm am Beispiel einer Werkstattsteuerung.

Fig. 14    ist eine Darstellung einer Durchlaufzeitoptimierung und eines Scheduling am Beispiel für Maschine 2.

Fig. 15    ist eine Schemazeichnung einer Spritzgießmaschine.

## DETAILLIERTE BESCHREIBUNG DER AUSFÜHRUNGSBEISPIELE UND FIGUREN

Im Folgenden wird die Erfindung anhand von Ausführungsbeispielen im Zusammenhang mit den Figuren näher beschrieben. Die Erfindung zielt darauf ab, cyber-physische Systeme (Fertigungsstraßen, Spritzgießsysteme, logistische Systeme oder andere technische Systeme) zu regeln und ihnen einen fehlerfreien Betrieb zu ermöglichen.

Dies gelingt bei ausreichender Messung der Prozesswerte durch eine auf Klassifikation basierenden Erklärung und durch einen auf Simulationsergebnissen basierenden Verbesserungsvorgang zur Einstellung der Aktuatoren.

Gemäß einem Aspekt betrifft die Erfindung ein Verfahren zur fehlerfreien Regelung eines simulierbaren, cyber-physischen oder technischen Systems, bei dem die Umgebung durch Sensoren wahrgenommen wird und Aktuatoren Aktionen zur Regelung des Systems auslösen können. Wesentliche Anwendungen sind die fehlerfreie Regelung einer Fertigungsmaschine (z. B. Spritzgießmaschine) und die fehlerfreie Regelung des Materialflusses eines Produktionssystems eines Fertigungsunternehmens.

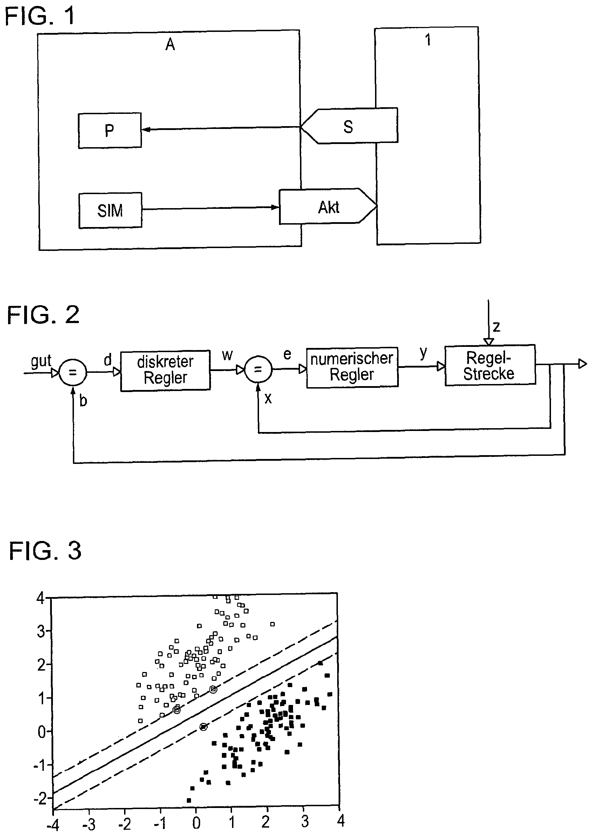

Dieser grundsätzliche Regelungskontext ist in **Fig. 1** auf schematische Weise repräsentiert.

Ein Klassifikationsagent A umfasst in der in Fig. 1 dargestellten Ausführungsform der Erfindung eine Berechnungseinheit P, die als Computer, als computer-basiertes Netzwerk oder Mikroprozessor ausgebildet sein kann und einen Simulationsbaustein SIM. Als Eingangsgrößen werden IST-Sensordaten von einem Sensorsystem S erfasst, das auf dem Fertigungssystem ausgebildet ist und typischerweise eine Vielzahl von unterschiedlichen Sensoren umfasst. Diese werden einer Eingangsschnittstelle weitergereicht, die in dem in Fig. 1 dargestellten Beispiel in dem Klassifikationsagenten A angeordnet ist und die ebenfalls als Sensor im Sinne eines Systems der künstlichen Intelligenz bezeichnet werden kann.

Bei dem Fertigungssystem 1 handelt es sich beispielsweise um eine Spritzgießmaschine.

Von dem Simulator (Simulationsbaustein) SIM oder von der Berechnungseinheit P werden Einstelldatensätze erzeugt, die dann per Hostschnittstelle (=Aktuator Akt) zur Spritzgießmaschine heruntergeladen werden und können über eine Ausgangsschnittstelle des Klassifikationsagenten A angesprochen werden.

In einer alternativen Ausführungsform der Erfindung können der Klassifikationsagent A, die Berechnungseinheit P und der Simulationsbaustein SIM auch als getrennte Module ausgebildet sein. Alternativ können diese zu einer übergeordneten Einheit zusammengefasst werden. Es ist auch möglich, dass der Simulationsbaustein SIM und/oder der Klassifikationsagent A jeweils Bestandteil der Berechnungseinheit P sind. In diesem Fall dient der Klassifikationsagent A zur Klassifikation der erfassten Sensordaten, um diese der Berechnungseinheit P zur weiteren Berechnung weiterzuleiten.

Die Erfindung betrifft also im Grunde die Lösung der Industrie 4.0 Probleme 1 und 2 für die diskrete Fertigung und die Semiprozessfertigung. Die Teile brauchen allerdings keineswegs eine eigene Intelligenz oder eine eigene IP-Adresse. Die Intelligenz liegt in der Regelung, nicht im Teil. Die Regelung ist ein wesentlicher Vorteil der erfindungsgemäß Lösung, da sie auf bisherige System in unveränderter Form angewendet werden kann, ohne, dass die Teile digitalisiert werden müssen.

Ein cyber-physisches System, engl. "cyber-physical system" (CPS), bezeichnet den Verbund informatischer, softwaretechnischer Komponenten mit mechanischen und elektronischen Teilen, die über eine Dateninfrastruktur, wie z. B. das Internet oder ein internes Intranet oder andere Netzwerke, kommunizieren.

Im Folgenden werden die mechanischen, elektronischen, physikalischen und/oder elektrischen Teile vereinfacht als Komponenten bezeichnet. Die beiden Standardbeispiele für cyber-physische Systeme in diesem Anmeldetext sind:

- Eine Spritzgießmaschine, die z.B. mit einem RFID-Drucker ausgebildet sein kann und einem mit der Maschine vernetzten Tablett, in dem Ausschuss deklariert werden kann.
- Eine Fertigung mit Montagelinie und Vorfertigungswerkstätten, die die Montagelinie so beliefern müssen, dass kein Bandstillstand entsteht.

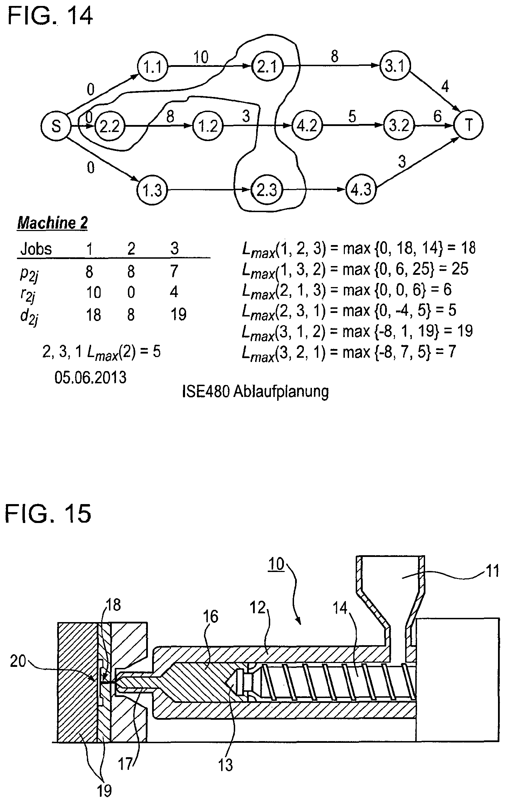

Im Folgenden wird die Erfindung für das Beispiel einer Spritzgießmaschinen-Regelung beschrieben. Eine Spritzgießmaschine 10 ist schematisch in **Fig. 15** in einer Seitenansicht dargestellt. Ein Trichter 11 dient zur Aufnahme von Kunststoff Rohmaterial in Form von Pellets, der auf einer Zylinderkammer 12 montiert ist. Diese umfasst einen konzentrischen Kolben 13 und eine Schnecke 14. Das geschmolzene Kunststoff-Rohmaterial wird in einen vorderen Teil der Zylinderkammer 12, zwischen Kolben 13 und Maschinendüse 17, gedrückt. Die Düse 17 ist mit einem Formhohlraum 20 mittels Anguss, Angussverteilern und Anschnitten verbunden. Die Spritzgießmaschine ist an einer Formwerkzeugstruktur befestigt. Je nach Form des Werkzeuges können unterschiedliche Formteile erzeugt werden.

In der Elektrotechnik und im Maschinenbau hat sich die Regelungstechnik durchgesetzt. Die hier vorgeschlagene Lösung betrifft eine verallgemeinerte Regelung, die auch in cyber-physischen Systemen einsetzbar ist.

Da hier nur numerische Werte zugelassen sind, wird diese Art der Regelung im Folgenden "numerische Regelung" genannt. Dieser Sachverhalt ist in **Fig. 2** dargestellt.

Eine Maschine soll so geregelt werden, dass sie nur gute Teile produziert. Die klassische Regelungstechnik ist von dieser Aufgabe überfordert, denn die Regelungstechnik basiert auf:

- Differentialrechnung

- Integralrechnung

- Lösen von (Differential-) Gleichungen.

Eine Fehlermeldung "Das Teil hat eine Einfallstelle" muss nämlich erst durch eine Vorverarbeitung und durch einen Führungsgrößengenerator in numerische Werte verwandelt werden, damit die klassische Regelungstechnik anwendbar wird.

Bei der vorstehend genannten Problemstellung haben wir zusätzlich eine Übertragungsfunktion mit einer endlichen Menge von Ausgangsgrößen, nämlich "Gut" oder "Ausschuss nach Grund".

Damit wird es notwendig, eine verallgemeinerte Lösung für eine Problemstellung zu finden, bei der sehr viele Eingangswerte in einem komplexen System so verarbeitet werden müssen, dass sie im Wesentlichen in sehr wenige Klassen klassifiziert werden können. Dazu können erfindungsgemäß hochwertige Mustererkennungsverfahren eingesetzt werden, deren Modell auf der biologisch-physiologischen Informationsverarbeitung des Menschen mit einer Großhirnrinde aus mustererkennendem Gewebe basiert, um diskrete Objekte schnell und sicher zu erkennen und Aktionen erzeugen sowie numerisch regeln zu können.

Um von den Fehlermeldungen zu numerischen Werten zu kommen, müssen die (sehr umfangreichen) Eingangsdaten (z.B. Sensordaten) vorverarbeitet werden. Dies kann über ein Klassifikationsverfahren, wie z.B. SVM (support vector machines), umgesetzt werden.

Ein Ergebnis einer SVM-Klassifikation ist beispielhaft in **Fig.3** dargestellt. Die Daten werden in zwei Klassen klassifiziert.

Unter einer Klassifikation der Menge X in die diskreten Klassen G verstehen wir einen Computer-basierten Prädiktor

$g : X \to G$ der den Eingaberaum X in die Menge diskreter Regionen von G aufteilt. Bei unserer Problemstellung unterstellen wir immer, dass es eine ausgezeichnete Klasse gibt, die wir mit "gut" bezeichnen.

Zu den Klassifikationsverfahren gehören insbesondere die Verfahren des statistical learning, wie z.B. SVM, aber auch das nachstehend beschriebene Klassifikationsverfahren für Kleinteile.

Die menschliche Informationsverarbeitung ist keine Selbstverständlichkeit, denn neuronale Netze geben nicht genug Information ab, um eine Senkrechte zur Grenzfläche zu errechnen. Unser Gehirn kann das und hochwertige Verfahren wie SVM können das ebenso. Die Klassifikation spielt also die Rolle einer verallgemeinerten Ortskarte. Eine Erklärung

Explain (erkläre) : $X \to X$ ist eine Zuordnung, die jedem Punkt von X einen zugehörigen ausreichend guten Punkt zuordnet. Die Punkt nennen wir SOLL-Prozesspunkt. Den Differenzvektor

$$V_{explain} = (explain(x) - x) / \| (explain(x) - x) \|$$

bzw. den zugehörigen Vektor der Länge 1 nennen wir Explainvektor. Wie in DE 102012104885 A1 beschrieben, läßt sich in Wechelfliessfertigungen ein fehlerfreier SOLL-prozesspunkt durch

$$Y_{soll} := Y_{ist} + (\sigma_{soll} - \sigma_{ist}) V_{explain}$$

errechnen. Dabei bedeutet:

$Y_{soll}$     SOLL-Prozesspunkt

$Y_{ist}$     mittlerer Prozesspunkt

$\sigma_{soll}$     SIX SIGMA Vorgabe

Die Aufgabenstellung ist nun, zu dem vorgegebenen SOLL-Prozesspunkt $Y_{soll}$ einen zugehörigen Einstelldatensatz zu finden. Im allgemeinen Fall ist das nicht möglich. Deshalb muss man einen möglichst passenden Einstelldatensatz durch Versuche ermitteln.

Sei E die Menge der möglichen Einstelldatensätze zu X. Eine Simulation

sim : E -> X errechnet virtuell, welche Prozesspunkte zu einem Einstelldatensatz gehören. Wir nennen eine Komponente oder ein cyber-physisches System simulierbar, wenn eine solche Simulationsfunktion berechenbar ist. Die Simulationsfunktion kann in einer vorteilhaften Ausführungsform der Erfindung in einem Simulator bzw. in einem Simulationsbaustein ausgeführt werden. Der Simulator ist ein Hardwarebauteil, in dem die Simulationsfunktion in Silizium (in silicio) implementiert ist. Im ersten Beispiel einer Spritzgießmaschinen wird die Fluss-Simulation durch Moldflow genauer besprochen.

Eine Verbesserung durch Simulation sucht zu einem verbesserten Prozesspunkt x einen möglichst guten Einstelldatensatz e $\varepsilon$ E. das heißt:

Improve (verbessere) : X -> E so dass

$$\| \text{ sim( improve(x) ) } - x \| = \inf \{ \| \text{ sim(e) } - x \| \mid e \in E \}$$

Der Agent übergibt also an die unterliegende numerische Regelung die Führungsgröße

improve( explain (x)) wenn die Sensoren vorher den fehlerhaften Prozesswert x gemessen hatten.

Wenn eine Simulationsfunktion existiert, so kann die response surface methodolgy (RSM) virtuell im Rechner angewendet werden, um "improve" zu errechnen. Dabei ist zu beachten, dass RSM davon ausgeht, dass die Wahrscheinlichkeit, wo das Optimum zu finden ist, nicht bekannt ist. In manchen Fällen, wie zum Beispiel den logistischen Fragen, ergibt sich aus der Fragestellung eine Vorkenntnis, die zu schnelleren Lösungsverfahren als RSM, führt. Dies wird erfindungsgemäß umgesetzt bzw. diese Vorkenntnis wird verrechnet, indem sich die Versuchspläne auf wahrscheinliche Stellgrößen beschränken.

Im Folgenden wir die Erfindung am Beispiel einer fehlerfreien Regelung einer Fertigungsmaschine beschrieben.

Eine Fertigungsmaschine besitzt ein Verarbeitungsfenster, bei dem gute Teile produziert werden, wenn dieses einen ausreichenden Abstand zur begrenzenden Hyperebene besitzt (siehe auch DE 102012104885 A1).

An solchen Fertigungsmaschinen können Störgrößen und verdeckte Parameter auftreten. Im Beispiel Spritzgießmaschinen besprechen wir den verdeckten Parameter Viskosität..

Im Folgenden wird dieser Sachverhalt am Beispiel einer Motorsteuerung beschrieben. Die spezifischen Informationen sind dem Buch "Wilhelm Kleppmann: Versuchsplanung, Produkte und Prozesse optimieren, 7. Auflage, Hanser Verlag" (Seite 290 - 294) entnommen. Es handelt sich um ein einfaches Beispiel an einem 4-Zylinder Otto Motor mit 2l Hubraum und 120 kW Leistung. Die Daten gelten nur für eine ausgewählte Last/Drehzahlsituation. Eine Randbedingung war, dass die Konzentration der Schadstoffe NOx und HC nicht höher als 600 ppm sind.

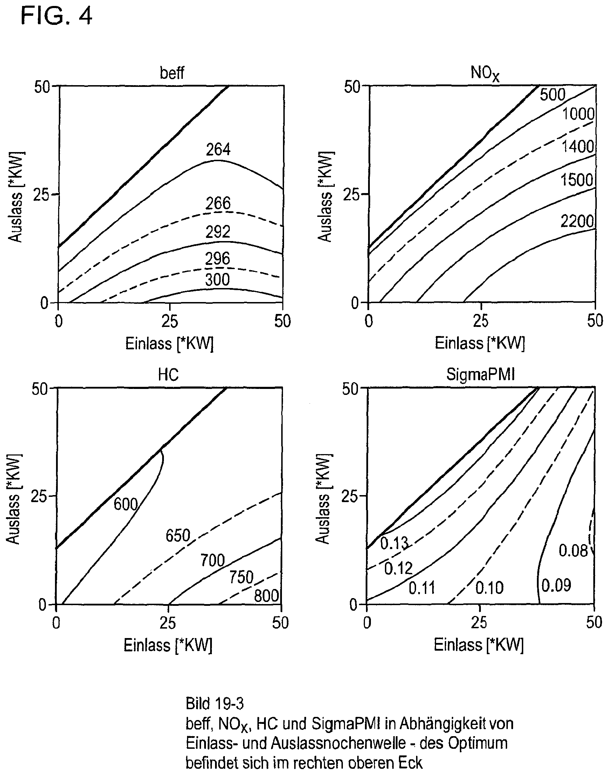

Das Beispiel zeigt deutlich die heute übliche Vorgehensweise, im Labor wird ein Versuchsplan erstellt, um die beste Motoreinstellung zu bestimmen. Dabei werden Störgrößen ignoriert. In **Fig. 4** sind die Ergebnisse zusammengestellt:

Zum gleichen Ergebnis kommt man mit der erfindungsgemäßen Lösung, die nicht auf einer realen Ausführung von Versuchen basiert, sondern indem Versuche simuliert bzw. nur rechnerisch bzw. virtuell ausgeführt werden. Diese sieht eine andere Reihenfolge der Verarbeitungsschritte vor: Nämlich, erst die Grenzflächen zu 600 ppm zu bestimmen, danach den optimalen fehlerfreien SOLL-Prozesspunkt zu ermitteln und danach die zugehörigen Einstelldaten zu berechnen.

Im Steuergerät des Motors eines Automobils sind nun abhängig von Last, Drehzahl und Motortemperatur optimale Werte hinterlegt, nach denen nun der Motor gesteuert wird.

Wenn man in jedem Motor eine Simulationsrechnung durchführen würde, käme exakt das Gleiche heraus. Der Unterschied ist nur, unser Verfahren beachtet prinzipiell auch Störgrößen. Damit ist die erfindungsgemäße Lösung wesentlich praxisnaher, da ein technisches System immer Störgrößen hat.

Im Folgenden wird das erfindungsgemäße Regelungsverfahren am Beispiel für ein fehlerfreies Spritzgießen erläutert.

Einige Grundlagen zum fehlerfreien Spritzgießen finden sich bereits in DE 102012104885 A1. Diese Schrift zeigt jedoch noch keine vollständige Lösung des Problems, da die Flusssimulation des Materials auf Basis der Geometriedaten des Werkzeugs fehlt und nicht berücksichtigt werden kann. Im Folgenden eine detaillierte Beschreibung.

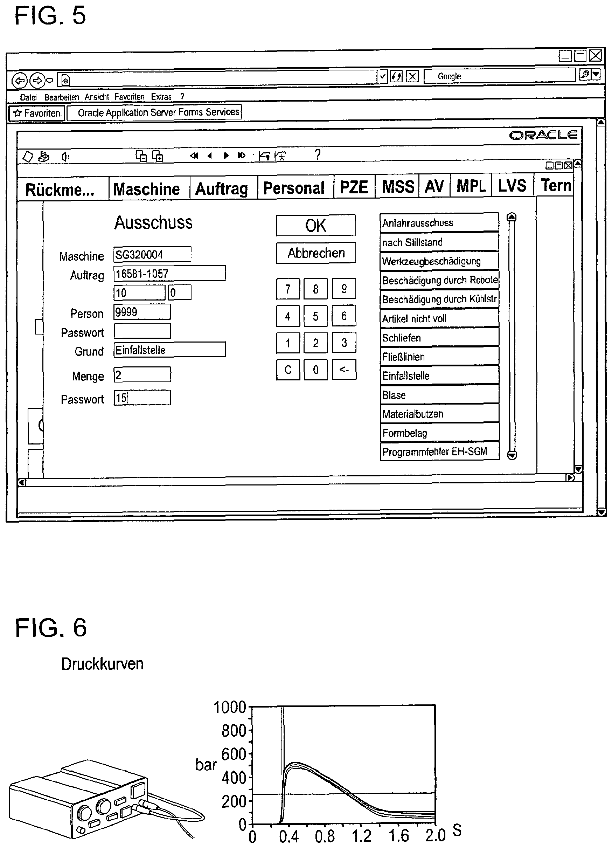

Als erstes wird der auftretende Ausschuss nach Grund erfasst. Eine Bildschirmoberfläche mit einer entsprechenden Maske dazu ist in **Fig.5** beispielhaft dargestellt.

Im konkreten Fall ist der Ausschussgrund eine Einfallstelle. An Fertigungsmaschinen werden Prozessdaten in Form von IST-Sensordaten erfasst. Dazu gehört auch eine Erfassung des Werkzeuginnendrucks. Dieser kann mit technischen Geräten erfasst werden und in Form einer Kurve mit einem Druckverlauf über die Zeit repräsentiert werden. Ein Beispiel dafür ist in **Fig. 6** dargestellt. Die IST-Sensordaten können mit im Stand der Technik bekannten Messgeräten erfasst werden.

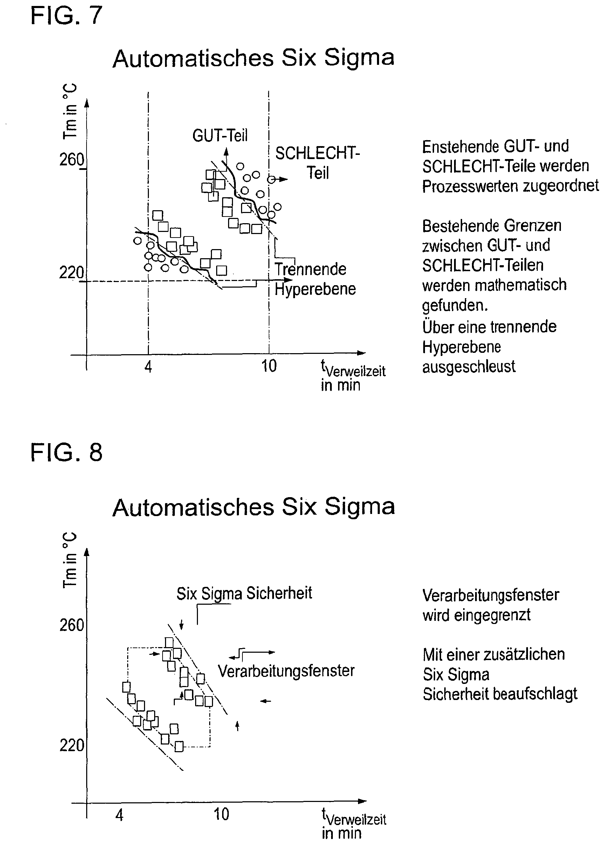

Durch Anwendung bzw. Ausführung eines automatischen Klassifikationsverfahrens werden gute und schlechte Teile getrennt. Ein solches Klassifikationsverfahren ist in **Fig. 7** dargestellt. Entstehende GUT- und SCHLECHT-Teile werden Prozesswerten zugeordnet. Bestehenden Grenzen zwischen GUT- und SCHLECHT Teilen werden mittels einer mathematischen Berechnung gewonnen und über eine trennende Hyperebene ausgeschleust.

Für jeden Kunststoff- außer PVC - existiert ein solches Prozessfenster. Die Y-Achse beschreibt die Temperatur in der Spritzgießmaschine. Die X-Achse beschreibt die Verweilzeit in der Maschine. Mit Hilfe einer Klassifikation (hier SVM) können Ausschuss und gute Teile getrennt werden.

Um sicher zu gehen, dass gute Teile produziert werden, muss man sich auf einen inneren Teil des Fensters beschränken, das Verarbeitungsfenster, das näher in Zusammenhang mit **Fig. 8** beschrieben und dargestellt wird.

Die Anmelderin hat eine Theorie der Kurvenklassifikation entwickelt und nachgewiesen, dass SVM in der Topologie des Funktionenraumes konvergiert. Damit wird es erstmal möglich, die Klassifikationen auch auf Werkzeuginnendruckkurven anzuwenden. Wie in Fig. 8 gezeigt, wird das Verarbeitungsfenster eingeschränkt und mit einer zusätzlichen Six Sigma Sicherheit beaufschlagt. Zu weiteren technischen Details zu dem SIX SIGMA Verfahren wird auf die DE 10 2010 037 552 A1 verwiesen, in der das Verfahren mathematisiert und automatisiert beschrieben ist.

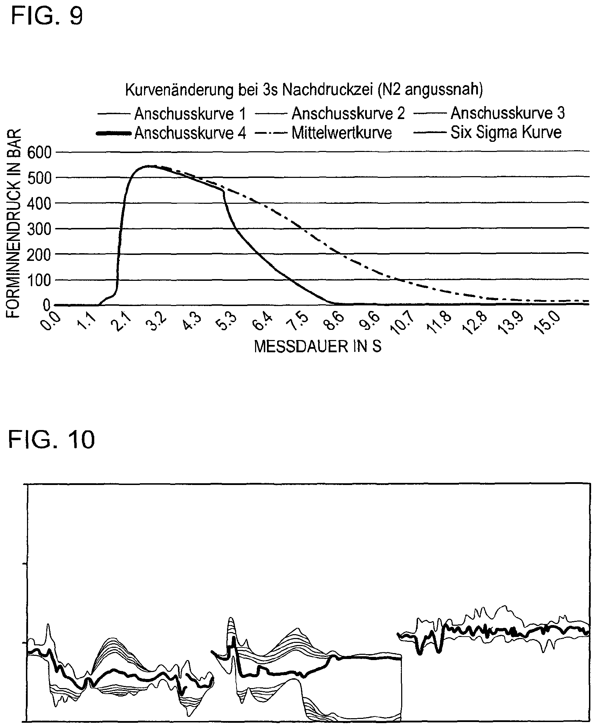

**Fig. 9** zeigt eine typische Kurve zum vorher genannten Ausschussgrund "Einfallstelle". Eine Einfallstelle ist im Spritzgießprozess von Kunststoffbauteilen eine Fehlerursache, die beim Abkühlen als Volumenkontraktion (Schwindung) auftritt. In Bereichen von Masseanhäufungen oder großen Wanddicken ist diese Volumenkontraktion der Schmelze erhöht, wobei das sich reduzierende Volumen nicht durch neue Schmelze ersetzt werden kann, da der Anschnittkanal schon erstarrt ist. Es werden somit Zugeigenspannungen im Inneren aufgebaut. Existiert eine hinreichend dicke Randschicht, können infolge der inneren Zugspannungen so genannte zentrale Lunker entstehen. Wenn jedoch die erstarrte Randschicht noch nicht stabil genug ist um der inneren Kontraktionsneigung entgegenzuwirken, wird die Oberfläche nach innen deformiert und Einfallstellen bzw. Vertiefungen an der Formteiloberfläche entstehen. Insbesondere an größeren Masseanhäufungen oder bei höheren Wandstärken treten diese Einfallstellen auf.

Einfallstellen treten auf, wenn der Nachdruck oder die Nachdruckzeit zu niedrig sind, wie im obigen Beispiel.

Bei Klassifikationen werden im allgemeinen Z-Transformationen verwendet.

Fig. 10 zeigt ein Diagramm für die Z-Transformierte von Ausschussteilen mit zu geringem Gewicht. Im linken Bereich in Fig 10 ist der Druck angussnah, im mittleren Bereich ist der Druck angussfern und im rechten Bereich die Temperatur aufgetragen.

Wie aus Fig. 10 ersichtlich, liegt die transformierte Druckkurve deutlich unter 0. Der Druck muss also erhöht werden. Eine neue optimierte Druckkurve kann erfindungsgemäß mit SVM EXPLAIN errechnet werden. Wenn also x eine fehlerhafte Werkzeuginnendruckkurve ist, so ist explain(x) die durch EXPLAIN bestimmte korrigierte Werkzeuginnendruckkurve.

Die zugehörigen Einstelldatensätze zu bestimmen, ist beim Spritzgießen besonders aus 3 Gründen besonders schwierig:

1) Alle unterschiedlichen Werkzeuge benötigen aufgrund anderer Geometrie unterschiedliche Einstelldatensätze.

2) Unterschiedliche Materialien benötigen unterschiedliche Einstelldatensätze und bei den Materialien können wichtige Charakteristika, wie die Viskosität schwanken.

3) Es gibt erhebliche Störgrößen, denn die Regelung der Standardsteuerung basiert auf Maschinenwerten.

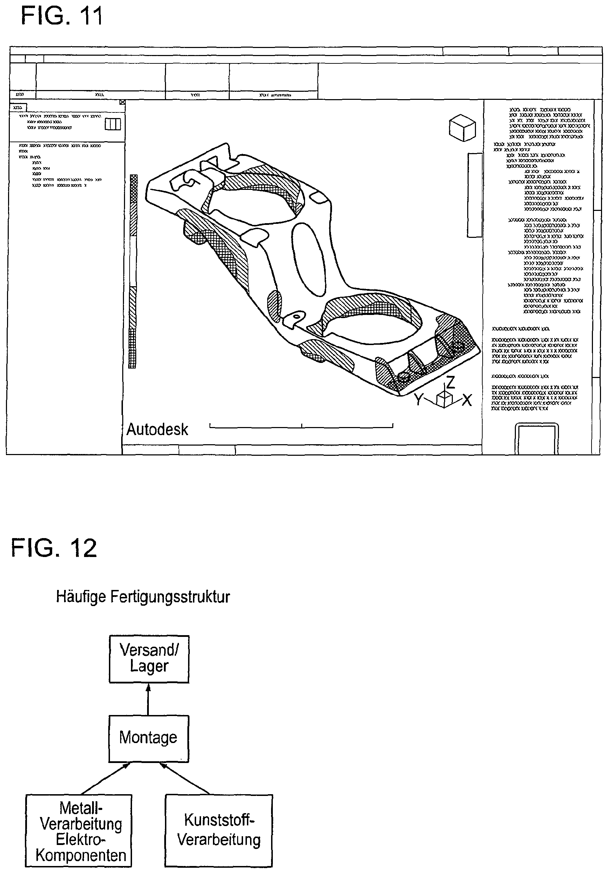

Um den Lösungsweg zu erläutern, wird auf **Fig. 11** mit einem Beispielbild einer Moldflow Simulation Bezug genommen. Bereits in den 90ger Jahren wurde Moldflow von der Firma Autodesk eingesetzt, um den Materialfluss zu simulieren, ein Endergebnis war eine errechnete Soll-innendruckkurve.

In der Patentschrift US 5,578,256 stellte Moldflow das Konzept vor, eine Spritzgießmaschine auf Basis der Differentialkurve einer an der Düse gemessenen Druckkurve zu steuern. Dabei werden aber weder Ausschussgründe, noch Störgrößen, noch im Werkzeug gemessene Prozesswerte, aus den ein SOLL-Prozesspunkt ermittelt wird, berücksichtigt. Diesen Nachteil überwindet die erfindungsgemäß vorgeschlagene Lösung. Bei dem erfindungsgemäßen Regelungsverfahren werden sowohl die Ausschussgründe als auch die Störgrößen bei der Regelung des Fertigungssystems berücksichtigt. Des Weiteren werden die im Werkzeug gemessene Prozesswerte verrechnet, also die numerischen Sensordaten, die für die Analyse von Fehlern/Ausschuss relevant sind. Damit kann die erfindungsgemäße Regelung zum einen automatisiert und zum anderen wesentlich besser an die realen, technischen Bedingungen angepasst ausgeführt werden.

Eine auf dem Werkzeuginnendruck basierende Regelung wurde in Michaeli, Gruber "Prozessführung beim Spritzgießen-direkte Regelung des Werkzeuginnendrucks steigert Reproduzierbarkeit" Zeitschrift Kunststofftechnik I 2005 1 vorgestellt. Dabei spielen aber Ausschussmeldungen und Simulationen keine Rolle, es wird nur auf numerische Effekte von Störgrößen reagiert.

Inzwischen wurde festgestellt, dass Ausschussgründe und Stellgrößen typischen Phasen des Spritzgießens zugeordnet werden können. Dies wurde in US 7,431,870 B2 ausgenutzt, um das Abmustern einer Spritzgießmaschine zu unterstützen. Die Abmusterung erfolgt aber immer noch manuell durch einen Einrichter, Störgrößen spielen noch keine Rolle.

Im Artikel Hopmann, Ressmann, Keuters "Betriebssystem der Produktion" Kunststoffe . 3/2014 wurde ein Prozessfluss bis an die Maschine beschrieben. Dabei wird aber die Konstruktion noch nicht einbezogen und es wird noch kein Zusammenhang zwischen Ausschussmeldungen und Prozesswerten erzeugt.

Damit haben wir genug zusammengetragen, um die neue Regelung einer Spritzgießmaschine beschreiben zu können. Wenn Ausschussmeldungen auftreten, kombinieren wir diese Information mit den erfassten Prozessdaten und errechnen mit SVM (oder einem anderen Klassifikationsverfahren) eine verbesserte SOLL-Werkzeuginnendruckkurve, bei der dieser Ausschussgrund nicht mehr auftritt. Wir gehen davon aus, dass das Werkzeug mit Kistler-Sensoren für Innendruck und Innentemperatur angussnah und angussfern ausgestattet ist. Damit ist es möglich, den "hidden Parameter" Viskosität z.B. mit Hilfe des EM-Verfahrens vorherzusagen. Ein EM-Verfahren kann als Expectation-Maximization-Algorithmus aus der mathematischen Statistik implementiert sein. Die Kernidee des EM-Algorithmus ist es, mit einem zufällig gewählten Modell zu starten, und abwechselnd die Zuordnung der Daten zu den einzelnen Teilen des Modells (Expectation-Schritt) und die Parameter des Modells an die neueste Zuordnung (Maximization-Schritt) zu verbessern. In beiden Schritten wird dabei die Qualität des Ergebnisses verbessert: Im E-Schritt werden die Punkte besser zugeordnet, im M-Schritt wird das Modell so verändert, dass es besser zu den Daten passt. Findet keine wesentliche Verbesserung mehr statt, beendet man das Verfahren. Das Verfahren dient zum Finden von "lokalen" Optima.

Als nächsten Schritt sollte die Simulation aufgrund der Geometrie-Daten kalibriert werden, so dass eine Rechnung aufgrund der jetzt bekannten IST-Materialdaten mit den Messungen des Werkzeuginnendrucks aufgrund der bestehenden Stellgrößen übereinstimmt. Das bildet die Basis, um die Stellgrößen per Simulation zu suchen, die zur SOLL-Werkzeuginnendruckkurve führen. Dabei braucht man keinen RSM-Versuchsplan, denn es ist ja schon bekannt, welche Stellgrößen welchen Teil der Werkzeuginnendruckkurve beeinflussen. Mit Hilfe einer optimierten Versuchsplanung für Simulationsversuche können wir nun einen verbesserten Einstelldatensatz bestimmen. Dieser kann nach Freigabe durch einen Einrichter automatisch per Hostschnittstelle zur Spritzgießmaschine heruntergeladen werden.

Dabei ist zu beachten, dass ein Ausschuss wegen Restfeuchte und Anfahren nicht zu vermeiden ist. Der hier beschriebene Klassifikationsagent A kann auch dazu verwendet werden, eine möglichst kostengünstige Produktion zu bestimmen. Für eine Verkürzung der Zykluszeit nimmt man eine gewisse Ausschussrate in Kauf und strebt das Kostenoptimum an.

Ein weiteres Anwendungsbeispiel des erfindungsgemäßen Verfahrens liegt in der Regelung eines fehlerfreien Materialflusses.

Die im Folgenden beschriebene Anwendung des Klassifikationsagenten A dient zur Steuerung des Materialflusses, bei der produzierte Mengen an Maschinen oder während der Transporte erfasst werden und der Materialfluss durch seine Einstelldatensätze bzw. Stellgrößen Laufzeit der Maschinen, bzw. Bereitstellung von Ressourcen und die Maschinenbelegung gesteuert wird. Diese Erfindung betrifft eine der größten Einsparungsreserven der Industrie.

Eine typische Fertigungsstruktur ist in **Fig. 12** dargestellt.

Bei solchen Fertigungsstrukturen sind meist große Einsparungen möglich, oftmals im Millionenbereich. Auf der einen Seite kommt es öfters zu verspäteten Lieferungen der Montage, weil eine der vorgelagerten Werkstätten das benötigte Material nicht rechtzeitig geliefert hat. Auf der anderen Seite treten hohe Zwischenlager zwischen Vorfertigung und Montage auf. Bei den heute im Stand der Technik bekannten Steuerungen für Fertigungssysteme treten Nachteile auf (zu hohe Zwischenlager, zu langsame Reaktion auf und/oder fehlende Anpassung an die Kundenwünsche).

Im Augenblick gibt es gibt es in Fabriken meist 4 Entscheidungsebenen im Materialfluss:

- In der Disposition werden die Losgrößen mit Hilfe eines ERP bestimmt.

- In der zentralen AV wird der Materialfluss, bzw. die Supply Chain gesteuert.

- Durch die Leiter der Werkstätten werden manuell die Stellgrößen (Einstelldaten) Laufzeit der Maschinen und Personalzahl bestimmt.

- In einem MES oder APS wird die Reihenfolge der Abarbeitung der Jobs festgelegt.

Die wissenschaftliche Theorie des "scheduling" blendet die Frage der Stellgrößenoptimierung aus, obwohl gerade diese einen dominanten Effekt hat. Wenn bei Engpässen die Kapazität nicht erhöht wird, kommt es zu verspäteten Kundenauslieferungen, oder Bandstillständen in Folgewerkstätten. Wenn umgekehrt die Kapazität zu hoch ist, kommt es zu ungenutzter Personalkapazität oder zu übergroßen Beständen.

Erfindungsgemäß wird hier eine Klassifikation durch den Scheduler ausgeführt. Der Klassifikationsagent A übernimmt in diesem Ausführungsbeispiel der Erfindung die Funktion eines Schedulers.

Für einen gegebenen Auftragsbestand gibt es typische Klassifizierungen:

- Auftragsbestand kann termingerecht ohne zu große Durchlaufzeit geliefert werden.

- Es treten Verspätungen auf.

- In einer Vorfertigung werden die Teile zu früh gefertigt -> Anstieg Durchlaufzeit.

Die richtige Klassifikation eines Auftragsbestandes erfolgt durch eine optimale Maschinenbelegung. Eine optimale Maschinenbelegung ist jedoch nicht berechenbar, man muss sich mit einer möglichst guten Näherung begnügen. Im Folgenden besprechen wir das Problem der optimalen Maschinenbelegung.

In vielen Bereichen der künstlichen Intelligenz hilft das Prinzip der Lokalisierung weiter, das gilt insbesondere für SVM, das hier eine große Rolle bei der Bestimmung der Einstelldatensätze (Stellgrößen) spielt. Die globalen Supportvektoren eines globalen SVM-Optimums setzen sich aus lokalen Supportvektoren lokaler Optima zusammen.

Das Prinzip der Lokalisierung heißt beim Scheduling Dekomposition (siehe Michael L. Pinedo: Scheduling , Theory, Algorithms and systems, Fourth edition Springer). Dabei gibt es mehrere Arten der Dekomposition:

- Maschinendekomposition: Die Jobs einer Gruppe werden zusammen verplant

- Auftragsdekomposition: Die Jobs eines Auftrags werden zusammen verplant.

- Zeitdekomposition: Die Jobs eines Zeitabschnitts werden zusammen verplant.

- Rüstdekomposition: Jobs, die eine rüstintensive Ressource nutzen, werden zusammen verplant.

Im Folgenden werden wird nun erklärt, wie man durch die Dekomposition der SchedulingProbleme zu einer Verbindung mit der Stellgrößenoptimierung kommen kann.

Die Anzahl der Jobs wird immer mit n bezeichnet, m bedeutet die Anzahl der Maschinen; i bezieht sich immer auf eine Maschine, j auf einen Job. Das Paar (i,j) bedeutet, dass der Job j auf Maschine i gefertigt wird.

Processing time (pij) ist die Durchlaufzeit des Jobs j auf Maschine i.

Release date (rj) ist der früheste Beginntermin.
Due date (dj) ist der Fälligkeitstermin

Weight (wj) ist die Priorität eines Jobs.

Schedulingprobleme werden mit dem Trippel $\alpha \mid \beta \mid \gamma$ beschrieben und bedeutet Maschinenumgebung, Verarbeitungscharakteristik und Zielgröße.

Die $\alpha$ - Felder können folgende Werte annehmen:

(1) bedeutet single machine (einzelne Maschine)

(Pm) bedeutet parallel machines (parallel betriebene Maschinen)

(Qm) bedeutet m geschwindigkeitsabhängige Maschinen

(Rm) bedeutet m Maschinen mit Refa-Sätzen, das heißt, einer Zuordnung, welche Maschinen erlaubt sind und mit welcher Geschwindigkeit sie mit welchen Job laufen.

(Fm) bedeutet flow job, oder Linie

(FFm) flexible flow Job ( Werkstattfertigung mit Werkstattfolge)

(Jm) job shop

(FJc) flexible Job shop ( Werkstattfertigung mit Arbeitsplan)

(Om) open shop

Die β - Felder können folgende Werte annehmen:

(rj) release date ( frühester Beginn )

(prmp) preemptions ( Unterbrechen erlaubt)

(prec) precedence constraints ( Reihenfolgeabhängigkeiten )

(sjk) setup times ( reihenfolgeabhängige Rüstzeiten)

(frmls) job families ( Rüstgruppen, z.B. gleiches Werkzeug)

(batch(b)) batch processing ( mehrere Aufträge auf einer Maschine)

(brkdwn) breakdown ( Berücksichtigung von Ausfallzeiten)

(Mj) Machine eligibility restrictions (z. B. Werkzeug-Maschinen-Zuordnungen)

(prmu) Permutations ( feste Auftragssequenzen )

(block) Block ( verkettete Maschinen )

(nwt) No wait ( Maschine muss laufen )

Die γ - Felder können folgende Werte annehmen:

(Cmax) Makespan ( letzter Endtermin )

(Lmax) maximum lateness ( größte Verspätung )

( $\Sigma$ wj Cj ) weighted Completion Time ( gewichtete Durchlaufzeit)

( $\Sigma$ wj Tj ) weighted Tardines ( gewichtete Verspätung in std )

( $\Sigma$ wj Uj) weighted number of tardy jobs ( Anzahl Verspätungen )

im Folgenden soll das Problem der Werkstattsteuerung am Beispiel einer Spritzerei erklärt werden.

In einer Spritzerei hat man m sehr unterschiedliche parallele Maschinen. Damit ist der erste Wert (Rm). Mehrere Aufträge können ein und dasselbe Werkzeug nutzen, damit entstehen Rüstfamilien. Das Material kann zu Materialtypen zusammengefasst werden, die Farben zu Farbgruppen, der zweite Wert ist also (frmls). Aufträge haben unterschiedliche Wichtigkeit, zum Beispiel muss ein Automobilzulieferer seine Serienteile pünktlich liefern, bei Ersatzteilen ist eine Verspätung nicht so schlimm. Damit wird eine Spritzerei beschrieben durch:

(Rm) | (frmls) | ( $\Sigma$ wj Tj )

Die meisten Probleme des Scheduling sind NP-schwer oder NP-vollständig und erlauben keine exakte Lösung. Das hat zur Definition der Schwachen ε-Näherung geführt, die aber eine so komplexe Definition hat, dass er hier weggelassen wird. Der Autor bewies nun folgenden Satz:
Satz:
Das Problem (Rm) | (frmls) | ( $\Sigma$ wj Tj ) hat eine schwache ε-Näherung quadratischer Komplexität.

Das Verfahren verwendet eine Kombination aus Zeitdekomposition und Rüstdekomposition. Das Verfahren ist robust gegen eine additive Erweiterung mit anderen oben genannten Zielgrößen.

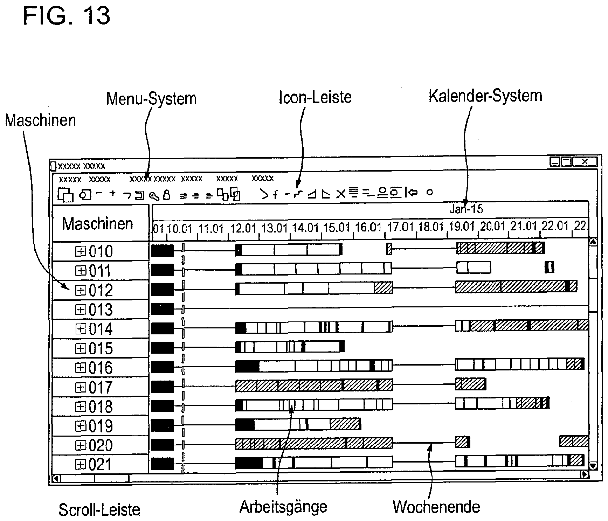

Eine graphische Repräsentation für eine Werkstattsteuerung ist ein Gantt-Chart oder Balkendiagramm, wie es aus dem Bereich der Projektplanung bekannt ist. Ein Beispiel ist in **Fig. 13** dargestellt.

Dabei werden Verspätungen und Rüstzeiten graphisch visualisiert. Die zentrale Materialflusssteuerung kann grob mit Hilfe der Maschinendekomposition und der Auftragsdisposition erfolgen. Diese sind z.B. in SAP APO realisiert.

Die Maschinendekomposition versteht man am Einfachsten mit dem Verfahren SBH (shifting bottleneck heuristic). SBH löst das Problem (Cmax) Makespan (letzter Endtermin) unter der Voraussetzung (Jm) job shop.

Wenn man ein solches Durchlaufzeitoptimierungsproblem lösen soll, so führt man eine Netzterminierung mit CPM durch und löst dann die Probleme der einzelnen Maschinen. Dies wir im Folgenden unter Bezugnahme auf **Fig. 14** näher erläutert.

Ein globales Durchlaufzeitproblem wird durch den Algorithmus umgesetzt in Probleme der Termineinhaltung der einzelnen Werkstätten. Wenn nun Verspätungen in den Werkstätten auftreten, muss global neu terminiert werden. Es erfolgt solange ein Resequenzierung, bis das Optimum erreicht ist.

Das Verfahren der Maschinendekomposition zeigt also ein ähnliches Zusammenspiel zwischen Werkstatt-Arbeitsvorbereitung und zentraler Arbeitsvorbereitung, wie es zwischen menschlichen Planern abläuft.

Der wesentliche Unterschied zwischen dem Verfahren und der realen Welt ist es, dass, wenn eine Zulieferung zu spät ist, wie in diesem Fall durch einen Engpass (bottleneck), dann muss die Kapazität des Engpasses erhöht werden, um die Verspätung zu vermeiden.

Hier landen wir jetzt bei dem Problem der Optimierung der logistischen Stellgrößen einer Produktion.

Erklärung der Fehler

Der vorher beschriebene Algorithmus weist auf die Erklärung der Fehler hin.

Engpass ist die Kapazitätsgruppe, die die größten Verspätungen hat; damit werden die Verspätungen durch nicht ausreichende Kapazität erklärt. Man findet aber nicht nur heraus, welche Kapazitätsgruppe der Engpass ist, sondern auch genau, wann der Engpass auftritt:

| Jobs | 1 | 2 | 3 |
|------|-----|-----|-----|
| $p_{2j}$ | 8 | 8 | 7 |
| $r_{2j}$ | 10 | 0 | 4 |
| $d_{2j}$ | 18 | 8 | 19 |

Betrachten wir die vorher beschriebene Aufgabenstellung von Maschine 2 mit der oben beschriebenen Durchlaufzeit p, frühestem Beginn r und Fälligkeit d.

Standardmäßig wird 5 Tage die Woche gearbeitet, aber Samstags- und Sonntagsarbeit ist ebenso möglich.

Die optimale Belegung erklärt hier ihren Kapazitätsbedarf, in der 3. Woche muss am Wochenende gearbeitet werden, in der 2. Woche ebenso, in der ersten Woche reicht ein Tag.

Die Kapazität muss dann bereitgestellt werden, wenn die Aufträge sie brauchen.

Der Explain-Vektor ändert also den Zustand der Aufträge von verspätet zu rechtzeitig und erzeugt den Kapazitätsbedarf, der durch die Funktion improve gedeckt werden muss.

Das große Problem des Scheduling ist es, dass es so viele Alternativen gibt. Wenn man nun die Möglichkeit gibt, zusätzliche Kapazität hinzuzunehmen, so nimmt die Anzahl der Alternativen noch einmal drastisch zu.

Am Wochenende können 0 - 6 Schichten laufen, es gibt also 7 Alternativen. Bei 4 Wochen bedeutet das, die Anzahl der Möglichkeiten hat sich um den Faktor 2401 vervielfacht. Dieser Faktor muss aber mit der Anzahl der Maschinen potenziert werden.

Wenn man bei dieser hohen Anzahl von Alternativen nicht weiß, wo man suchen soll, so ist das Problem nicht berechenbar.

Zunächst soll einmal der Bezug zum Vorgängerbeispiel hergestellt werden. Das erste Bild des ersten Beispiels hat Temperatur und Verweilzeit eines Materials in einer Spritzgießmaschine beschrieben.

Verbessern durch Simulation

Das Stellgrößenoptimierungsverfahren RSM (response surface methodology) geht auf eine Veröffentlichung von Box und Wilson (1951) zurück. Danach wurde das Verfahren von Box und Draper (1987), Myers (1989) und Montgomery weiterentwickelt.

Es gibt heute eine extensive Nutzung des Verfahrens in der industriellen Welt. Eines der bekanntesten Beispiele ist die Motoroptimierung. Im Steuergerät von Diesel- und Ottomotoren moderner Kraftfahrzeuge sind, abhängig von Drehzahl, Last, Motortemperatur usw. optimale Werte für die Motorsteuerung hinterlegt.

Im Folgenden werden Stellgrößen, Response und die Optimierungsrechnung, als Einstelldatensatzelemente genauer betrachtet.

Die Stellgrößen der Planung sind Kapazitäten. Mit jeder Ressource ist ihre Anzahl verbunden; diese ist meist ganzzahlig (z. B. Gruppe A hat 5 Arbeitsplätze).

Anders als die Stellgrößen einer Maschine, die meistens eine einfache reelle Zahl ist, haben wir als zusätzliche Dimension noch den Kalender und die Verfügbarkeit. Aber auch diese Dimensionen können mit Versuchsplänen abgebildet werden. Wenn man also eine Kapazität erhöhen will, so hat man die Auswahl, die Anzahl der Schichten zu erhöhen, oder die Anzahl der Arbeitsplätze. In den Versuchsplänen für eine Stellgrößenoptimierung müssen beide Dimensionen abgebildet werden.

Eine Erhöhung der Anzahl der Arbeitsplätze erhöht die Kosten der Fertigung; eine Erhöhung der Schichten ebenso. Eine solche Erhöhung der Kosten ist nur gerechtfertigt, wenn die Folgekosten einer ausgebliebenen Kapazitätserhöhung größer sind, als die Kosten der Kapazitätserhöhung.

Nennen wir die Stellgrößen der Planung wieder $x1,....xn$.
Nennen wir die Kosten der Kapazitäten $C(x1,...xn)$

Demgegenüber stehen (siehe Abschnitt eigene Vorarbeiten)

die Kosten der Maschinenbelegung $B(x1....xn)$

Wir sollen nun die Gesamtkosten minimieren, die Aufgabenstellung ist also

Minimiere: $y = C(x1,....xn) + B(x1,....xn)$

Wobei $x1,....xn$ die zulässigen Stellgrößen der Planung beschreibt.

Die Anmelderin hat ein RSM-Testprogramm geschrieben und auf eine immer steigende Anzahl von Maschinen angewendet. Die gemessene Komplexität lag bei ca. $c * m * m$, wobei $c$ eine problemabhängige Konstante ist (ungefähr 5).

Nehmen wir nun an, dass eine Belegungsoptimierung 10 Sekunden dauert, so kommt man auf eine Rechenzeit von $5 * 100 * 100 * 10$ Sekunden, also ca. eine Woche. Damit ist RSM als Verfahren, angewendet auf alle Maschinen, unbrauchbar.

Der Fehler des RSM-Ansatzes ist, dass die RSM-Versuchspläne optimal sind, wenn man keine Vorkenntnis hat, aber wir haben ja eine Vorkenntnis. Bei Maschinen, bei denen starke Verspätungen auftreten, wissen wir, dass die Kapazität erhöht werden muss, umgekehrt deuten belegungsfreie Zeiten auf einer Maschine auf Überkapazität hin.

Der explain-Vektor hat uns informiert, an welcher Stelle Kapazität benötigt wird. Im Beispiel gab es nur die Möglichkeit, mit Wochenendarbeit zu reagieren. Im allgemeinen Fall ist es jedoch zusätzlich möglich, die Anzahl der Arbeitsplätze zu erhöhen, oder die Laufzeit anderer vergleichbarer Maschinen zu erhöhen.

Somit muss eine Simulation der hier beschriebenen Alternativen durchgeführt werden, um näherungsweise optimale Stellgrößen zu finden. Der klassische RSM-Algorithmus muss dabei an unsere Vorkenntnisse angepasst werden, denn durch die vorige Belegungsrechnung können wir die Stellgrößen einteilen in

a) Stellgrößen, die sicher geändert werden müssen

b) Stellgrößen, die mit einer gewissen Wahrscheinlichkeit geändert werden müssen

c) Stellgrößen, die nicht geändert werden müssen.

Der zu verwendende Versuchsplan sollte also Stellgrößen, die nicht geändert werden müssen, außer Acht lassen und bei den anderen die Stellgrößen mit hoher Wahrscheinlichkeit bevorzugt in die Versuchspläne aufnehmen.

Ein Auftragsbestand mit 32 MT (Manntagen) soll auf 2 Maschinen m1 und m2 gelegt werden, die normal 5 Tage die Woche laufen. Rein aus Kapazitätsgründen reicht ein zusätzlicher Arbeitstag aus. Die Randbedingen, dass J1 nur auf m1 läuft und J2 nur auf m2 läuft, führt dazu, dass ein zusätzlicher Tag am Wochenende gefertigt werden muss.

Andere Anwendungen

Es gibt eine Vielzahl andere Anwendungen, zum Beispiel:

d) Lackieren von mit Tags versehenen Kunststoffteilen

e) SIX SIGMA Analysen mit automatischer Datenerfassung und Modell

f) Pressen von Elastomerén.

Fertigung von Kleinteilen

Eine schnelle und präzise Klassifikation setzt voraus, dass von jedem Teil bestimmt wird, ob das Teil gut ist oder Ausschuss aufgetreten ist und welche Prozessdaten dabei beteiligt waren.

Bei einer Serienfertigung von Kleinteilen ist eine solche Herstellungsmethodik viel zu teuer, hier gibt es 2 Möglichkeiten

a) Schichteinteilung

Der Ausschuss nach Grund wird schichtweise erfasst.
b) Chargenverfolgung
Die Transporteinheiten der Teile sind durch Tags gekennzeichnet und der Ausschuss nach Grund kann einer Charge zugeordnet werden.
Zur Vereinfachung sprechen wir von den Schichtmengen oder der Charge (Einheit) von einem Los.
Zu jedem Los kennen wir die Prozessdaten der Teile (mit leichter Ungenauigkeit) und die Anzahl der Ausschussteile nach Grund. Aus den Prozessdaten der Teile können wir einen Kennzahlenvektor erstellen. Für jeden Ausschussgrund erhalten wir damit eine Funktion

f: K-> R

wobei f(k) die Anzahl der Ausschussteile ist.
Damit entsteht eine Prädiktionsaufgabe, aus Kennzahlenvektoren die Anzahl der Ausschussteile vorherzusagen, die Regression. Man benötigt eine erhebliche Menge von Kennzahlenvektoren, um verlässlich die Anzahl der Ausschussteile vorhersagen zu können.
Wenn man eine solche Regression hat, kann man wieder zur den ursprünglichen Prozessdaten zurückkehren und aus der Regression die Klassifikation errechnen, denn aus den Prozessdaten kann man mit Hilfe der Regression eine Ausschusswahrscheinlichkeit errechnen. Die Klassifikationsmethode nennen wir Kleinteilklassifikation.
Auch mit Hilfe der Kleinteilklassifikation kann man nun den neuen gesuchten SOLL-Prozesspunkt errechnen.
Zusammenfassend basiert die vorliegende Erfindung auf der Idee, eine technische Anlage (insbesondere Spritzgießanlage) auf Basis von automatisch berechneten Einstelldaten so zu regeln, dass ein fehlerfreier Betrieb (ohne oder mit minimiertem Ausschuss) sichergestellt werden kann. Dazu werden die Einstelldaten zur Regelung der Maschine mittels Methoden des maschinellen Lernens und durch simulierte Versuche berechnet.
In einer komplexen Ausführungsform der Erfindung können auch mehrere Systeme zusammengeschlossen werden, um eine maschinenübergreifende Regelung zu ermöglichen. Dies hat den Vorteil, dass Trainingsdatensätze von mehreren Maschinen aggregiert werden können, was die Qualität der berechneten Einstelldaten verbessert.
Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren. Es liegt somit z.B. ebenso im Rahmen der Erfindung neben der Fertigungsmaschine bzw. der Spritzgießmaschine andere technischen Systeme mit dem erfindungsgemäßen Verfahren zu regeln. Dabei kann es sich z.B. um logistischen Systeme oder um andere Produktionsanlagen handeln. Für einen Fachmann ist es insbesondere offensichtlich, dass die Erfindung nicht nur mit SVM als Klassifikationsalgorithmus angewendet werden kann, sondern auch mit anderen Klassifikationsverfahren.
Des Weiteren können die Bauteile des Regelungssystems auf mehrere physikalische Produkte (Klassifikationsagent, Berechnungseinheit, Prozessor etc.) verteilt realisiert werden.
Der Schutzbereich der vorliegenden Erfindung ist durch die Ansprüche gegeben und wird durch die in der Beschreibung erläuterten oder den Figuren gezeigten Merkmale nicht beschränkt.

**Patentansprüche**

1. Verfahren zur automatischen Regelung eines Fertigungssystems (1) der diskreten Fertigung und der Semiprozessfertigung, umfassend folgende Verfahrensschritte:

   - Erfassen von Sensordaten während des Betriebs des Fertigungssystems (1)
   - Klassifikation der erfassten Sensordaten durch Vorverarbeiten der erfassten Sensordaten und aufgrund dessen Berechnen eines Verarbeitungsfensters mit SOLL-Prozesspunkten, die jeweils eine Menge von Prozesswerten, bei deren Anwendung fehlerfrei produziert werden kann, darstellen, für einen fehlerfreien Betrieb des Fertigungssystems (1),
- Bestimmen eines Einstelldatensatzes als Führungsgröße für das Fertigungssystem (1), indem Versuchspläne mit wahrscheinlichen Führungsgrößen erstellt werden und in einem Simulationsmodell zugehörige Prozesswerte errechnet werden, die mit den Prozesswerten der jeweiligen vorher berechneten SOLL-Prozesspunkte des Verarbeitungsfensters verglichen werden und indem die Führungsgrößen solange schrittweise verbessert werden, bis sich die errechneten zugehörigen Prozesspunkte in dem Verarbeitungsfenster und nahe den jeweils berechneten SOLL-Prozesspunkten befinden,

**dadurch gekennzeichnet, dass**
ein Materialfluss in dem Fertigungssystem (1) geregelt wird, wobei produzierte Mengen an Maschinen, Arbeitsstationen und/oder während eines Transportes erfasst werden und wobei der Materialfluss durch den bestimmten Einstelldatensatz, umfassend Laufzeiten an Arbeitsplätzen und eine Zuordnung von Ressourcen, geregelt wird und dass die schrittweise Verbesserung der Führungsgrößen nach der Regel "steepest ascent" erfolgt.

2. Verfahren nach Anspruch 1, wobei das Fertigungssystem eine Spritzgießbearbeitung umfasst.

3. Verfahren nach einem der vorangehenden Ansprüche, bei dem die erfassten Sensordaten einen Werkzeuginnendruck umfassen.

4. Verfahren nach einem der vorangehenden Ansprüche, bei dem zur Klassifikation ein Scheduling-Algorithmus mit kombinierten Dekompositionsverfahren angewendet wird.

5. Verfahren nach einem der vorangehenden Ansprüche, wobei bei dem Bestimmen des Einstelldatensatzes auch Störgrößen des Fertigungssystems (1) verrechnet werden.

6. Verfahren nach einem der vorangehenden Ansprüche, bei dem zur fehlerfreien Regelung des Fertigungssystems (1) Ausschussgründe erfasst werden, die zur Klassifikation verarbeitet werden.

7. Verfahren nach einem der vorangehenden Ansprüche, bei dem zur Optimierung der Simulation ein auf einer Response-Surface-Methode (RSM) basierter Algorithmus verwendet wird.

8. Verfahren nach einem der vorangehenden Ansprüche, bei dem zur Klassifikation ein Support-Vector-Machines (SVM)-Verfahren verwendet wird.

9. Verfahren nach einem der vorangehenden Ansprüche, bei dem das Fertigungssystem (1) mehrere Komponenten umfasst, die numerisch geregelt sind, und eine übergeordnete diskrete Regelung umfasst, die den numerischen Regelungen Führungsgrößen vorgibt.

10. Regelungssystem zur automatischen Regelung eines Fertigungssystems (1) der diskreten Fertigung und der Semiprozessfertigung, umfassend:

- Ein System (S) zum Erfassen von Sensordaten während des Betriebs des Fertigungssystems (1)
- Einen Klassifikationsagenten (A), der zur Klassifikation der erfassten Sensordaten durch eine Vorverarbeitung der erfassten Sensordaten und aufgrund dessen zum Berechnen eines Verarbeitungsfensters mit SOLL-Prozesspunkten, die jeweils eine Menge von Prozesswerten, bei deren Anwendung fehlerfrei produziert werden kann, darstellen, für einen fehlerfreien Betrieb des Fertigungssystems (1) ausgelegt ist,
- Eine Berechnungseinheit (P), die zum Bestimmen eines Einstelldatensatzes als Führungsgröße für das Fertigungssystem (1) dient, wobei die Berechnungseinheit (P) eingerichtet ist, in einem Simulationsmodell Versuchspläne mit wahrscheinlichen Führungsgrößen zu erstellen und zugehörige Prozesswerte zu errechnen, die mit den Prozesswerten der jeweiligen vorher errechneten SOLL-Prozesspunkten verglichen werden und indem die Führungsgrößen solange schrittweise verbessert werden, bis sich die errechneten zugehörigen Prozesspunkte im Verarbeitungsfenster und nahe den errechneten SOLL-Prozesspunkten befinden, **gekennzeichnet dadurch,**

**dass** das Fertigungssystem (1) eingerichtet ist, einen Materialfluss zu regeln, wobei produzierte Mengen an Maschinen, Arbeitsstationen und/oder während eines Transportes erfasst werden und wobei der Materialfluss durch den bestimmten Einstelldatensatz, umfassend Laufzeiten an Arbeitsplätzen und eine Zuordnung von Ressourcen, geregelt wird und dass die schrittweise Verbesserung der Führungsgrößen nach der Regel "steepest ascent" erfolgt.

**Claims**

1. Method for the automatic control of a manufacturing system (1) of discrete manufacturing and semiprocess manufacturing, comprising the following method steps:

   - Acquisition of sensor data during operation of the manufacturing system (1)
   - Classification of the acquired sensor data by pre-processing the acquired sensor data and, based on this, calculating a processing window with TARGET process points, each of which represents a set of process values, the application of which can produce without errors, for error-free operation of the manufacturing system (1),
   - Determining an adjustment data set as a command variable for the manufacturing system (1) by creating test plans with probable command variables and calculating associated process values in a simulation model, which are compared with the process values of the respective previously calculated TARGET process points of the processing window and by improving the command variables step by step until the calculated associated process points are in the processing window and close to the respective calculated TARGET process points,

   **characterized in that**
   a material flow in the manufacturing system (1) is controlled, wherein produced quantities are detected at machines, work stations and/or during a transport and wherein the material flow is controlled by the determined adjustment data set, comprising run times at work stations and an allocation of resources, and that the stepwise improvement of the command variables is performed according to the rule "steepest ascent".

2. Method according to claim 1, wherein the manufacturing system comprises injection molding processing.

3. Method according to any one of the preceding claims, wherein the sensed sensor data comprises cavity pressure.

4. Method according to any one of the preceding claims, wherein a scheduling algorithm with combined decomposition methods is used for classification.

5. Method according to any of the preceding claims, wherein disturbance variables of the manufacturing system (1) are also offset when determining the adjustment data set.

6. Method according to any one of the preceding claims, in which, for error-free control of the manufacturing system (1), rejection reasons are recorded and processed for classification.

7. Method of any one of the preceding claims, wherein a response surface method (RSM) based algorithm is used to optimize the simulation.

8. Method of any one of the preceding claims, wherein a support vector machines (SVM) method is used for classification.

9. Method according to any one of the preceding claims, wherein the manufacturing system (1) comprises a plurality of components that are numerically controlled, and comprises a higher-level discrete control that provides command variables to the numerical controls.

10. Control system for automatically controlling a manufacturing system (1) of discrete manufacturing and semi-process manufacturing, comprising:

    - A system (S) for acquiring sensor data during operation of the manufacturing system (1)
    - A classification agent (A) adapted to classify the acquired sensor data by pre-processing the acquired sensor data and, based thereon, to calculate a processing window with TARGET process points, each representing a set of process values, the application of which ensures error free production for error-free operation of the manufacturing system (1),
    - A calculation unit (P) which serves to determine an adjustment data set as a command variable for the manufacturing system (1), wherein the calculation unit (P) is configured to create test plans with probable command variables in a simulation model and to calculate associated process values, which are compared with the process values of the respective previously calculated TARGET process points and by improving the command variables step by step until the calculated associated process points are in the processing window and close to the calculated TARGET process points, **characterized in that**,

that the manufacturing system (1) is arranged to control a material flow, wherein produced quantities are detected at machines, work stations and/or during a transport, and wherein the material flow is controlled by the determined adjustment data set, comprising run times at work stations and an allocation of resources, and that the stepwise improvement of the reference variables is performed according to the rule "steepest ascent".

**Revendications**

1. Procédé de régulation automatique d'un système de fabrication (1) de la fabrication discrète et de la fabrication semi-processus, comprenant les étapes de procédé suivantes :

   - Collecte de données de capteurs pendant le fonctionnement du système de fabrication (1)
   - classification des données de capteur acquises par prétraitement des données de capteur acquises et, sur la base de celles-ci, calcul d'une fenêtre de traitement avec des points de processus de CONSIGNE, qui représentent chacun un ensemble de valeurs de processus, dont l'application permet une production sans erreur, pour un fonctionnement sans erreur du système de fabrication (1),
   - déterminer un ensemble de données de réglage en tant que grandeur de guidage pour le système de fabrication (1), en établissant des plans d'essai avec des grandeurs de guidage probables et en calculant, dans un modèle de simulation, des valeurs de processus associées qui sont comparées aux valeurs de processus des points de processus de consigne respectifs, calculés au préalable, de la fenêtre de traitement et en améliorant pas à pas les grandeurs de guidage jusqu'à ce que les points de processus associés calculés se trouvent dans la fenêtre de traitement et à proximité des points de processus de consigne respectifs calculés,

   **caractérisé en ce que**
   un flux de matière est régulé dans le système de fabrication (1), des quantités produites étant saisies sur des machines, des postes de travail et/ou pendant un transport, et le flux de matière étant régulé par l'ensemble de données de réglage déterminé, comprenant des temps de marche à des postes de travail et une affectation de ressources, et **en ce que** l'amélioration progressive des grandeurs de guidage s'effectue selon la règle "steepest ascent".

2. Procédé selon la revendication 1, dans lequel le système de fabrication comprend un usinage par injection.

3. Procédé selon l'une quelconque des revendications précédentes, dans lequel les données de capteur acquises comprennent une pression d'empreinte.

4. Procédé selon l'une des revendications précédentes, dans lequel on utilise pour la classification un algorithme d'ordonnancement avec des procédés de décomposition combinés.

5. Procédé selon l'une des revendications précédentes, dans lequel des grandeurs perturbatrices du système de fabrication (1) sont également calculées lors de la détermination de l'ensemble de données de réglage.

6. Procédé selon l'une des revendications précédentes, dans lequel, pour une régulation sans erreur du système de fabrication (1), on saisit des motifs de rejet qui sont traités pour la classification.

7. Procédé selon l'une quelconque des revendications précédentes, dans lequel un algorithme basé sur une méthode de surface de réponse (RSM) est utilisé pour optimiser la simulation.

8. Procédé selon l'une des revendications précédentes, dans lequel on utilise pour la classification un procédé Support-Vector-Machines (SVM).

9. Procédé selon l'une des revendications précédentes, dans lequel le système de fabrication (1) comprend plusieurs composants qui sont régulés numériquement et comprend une régulation discrète supérieure qui impose des grandeurs de guidage aux régulations numériques.

**10.** Système de régulation pour la régulation automatique d'un système de fabrication (1) de la fabrication discrète et de la fabrication semi-processus, comprenant :

- Un système (S) pour collecter des données de capteurs pendant le fonctionnement du système de fabrication (1)
- un agent de classification (A) qui est conçu pour classifier les données de capteur acquises par un prétraitement des données de capteur acquises et, sur la base de cela, pour calculer une fenêtre de traitement avec des points de processus de CONSIGNE qui représentent chacun un ensemble de valeurs de processus dont l'application permet une production sans erreur, pour un fonctionnement sans erreur du système de fabrication (1),
- Unité de calcul (P) servant à déterminer un ensemble de données de réglage en tant que grandeur de commande pour le système de fabrication (1), l'unité de calcul (P) étant agencée pour établir, dans un modèle de simulation, des plans d'essai avec des grandeurs de commande probables et pour calculer des valeurs de processus associées qui sont comparées aux valeurs de processus des points de processus de consigne respectifs précédemment calculés et en améliorant pas à pas les grandeurs de commande jusqu'à ce que les points de processus associés calculés se trouvent dans la fenêtre de traitement et à proximité des points de processus de consigne calculés, **caractérisée en ce que**

**en ce que** le système de fabrication (1) est agencé pour réguler un flux de matière, des quantités produites étant saisies sur des machines, des postes de travail et/ou pendant un transport, et le flux de matière étant régulé par l'ensemble de données de réglage déterminé, comprenant des temps de marche à des postes de travail et une affectation de ressources, et **en ce que** l'amélioration pas à pas des grandeurs de guidage s'effectue selon la règle "steepest ascent".

## FIG. 1

## FIG. 2

## FIG. 3

## FIG. 4

Bild 19-3
beff, NO_X, HC und SigmaPMI in Abhängigkeit von
Einlass- und Auslassnochenwelle - des Optimum
befindet sich im rechten oberen Eck

# FIG. 5

# FIG. 6

Druckkurven

# FIG. 7

## Automatisches Six Sigma

Enstehende GUT- und
SCHLECHT-Teile werden
Prozesswerten zugeordnet

Bestehende Grenzen
zwischen GUT- und
SCHLECHT-Teilen
werden mathematisch
gefunden.
Über eine trennende
Hyperebene
ausgeschleust

# FIG. 8

## Automatisches Six Sigma

Verarbeitungsfenster
wird eingegrenzt

Mit einer zusätzlichen
Six Sigma
Sicherheit beaufschlagt

## FIG. 9

Kurvenänderung bei 3s Nachdruckzei (N2 angussnah)

—— Anschusskurve 1 —— Anschusskurve 2 —— Anschusskurve 3
**——** Anschusskurve 4 —·— Mittelwertkurve —— Six Sigma Kurve

## FIG. 10

# FIG. 11

Autodesk

# FIG. 12

Häufige Fertigungsstruktur

# FIG. 13

Maschinen

Menu-System

Icon-Leiste

Kalender-System

| Maschinen | Jan-15 |
|---|---|
| | 01 10.01 11.01 12.01 13.01 14.01 15.01 16.01 17.01 18.01 19.01 20.01 21.01 22.01 22 |
| ⊞010 | |
| ⊞011 | |
| ⊞012 | |
| ⊞013 | |
| ⊞014 | |
| ⊞015 | |
| ⊞016 | |
| ⊞017 | |
| ⊞018 | |
| ⊞019 | |
| ⊞020 | |
| ⊞021 | |

Scroll-Leiste

Arbeitsgänge

Wochenende

# FIG. 14

**Machine 2**

| Jobs | 1 | 2 | 3 |
|------|----|----|----|
| $p_{2j}$ | 8 | 8 | 7 |
| $r_{2j}$ | 10 | 0 | 4 |
| $d_{2j}$ | 18 | 8 | 19 |

$$L_{max}(1, 2, 3) = max \{0, 18, 14\} = 18$$
$$L_{max}(1, 3, 2) = max \{0, 6, 25\} = 25$$
$$L_{max}(2, 1, 3) = max \{0, 0, 6\} = 6$$
$$L_{max}(2, 3, 1) = max \{0, -4, 5\} = 5$$
$$L_{max}(3, 1, 2) = max \{-8, 1, 19\} = 19$$
$$L_{max}(3, 2, 1) = max \{-8, 7, 5\} = 7$$

2, 3, 1 $L_{max}(2) = 5$

05.06.2013

ISE480 Ablaufplanung

# FIG. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012104885 A1
- DE 102010037552 A1
- US 5578256 A
- US 7431870 B2

**In der Beschreibung aufgeführte Nicht-Patentliteratur**

- Wilhelm Kleppmann: Versuchsplanung, Produkte und Prozesse optimieren. Hanser Verlag, 290-294